**Europäisches Patentamt**

**European Patent Office**

**Office européen des brevets**

(19)

(11) **EP 1 293 964 A2**

(12) **EUROPEAN PATENT APPLICATION**

(43) Date of publication:
**19.03.2003 Bulletin 2003/12**

(51) Int Cl.$^7$: **G10L 15/26**, G10L 15/06

(21) Application number: **02020498.8**

(22) Date of filing: **12.09.2002**

| | |
|---|---|
| (84) Designated Contracting States: **AT BE BG CH CY CZ DE DK EE ES FI FR GB GR IE IT LI LU MC NL PT SE SK TR** Designated Extension States: **AL LT LV MK RO SI** | (72) Inventor: **Yoshizawa, Shinichi** **Hirakata-shi, Osaka 573-0064 (JP)** |
| (30) Priority: **13.09.2001 JP 2001277853** | (74) Representative: **Grünecker, Kinkeldey, Stockmair & Schwanhäusser Anwaltssozietät Maximilianstrasse 58 80538 München (DE)** |
| (71) Applicant: **MATSUSHITA ELECTRIC INDUSTRIAL CO., LTD.** **Kadoma-shi, Osaka 571-8501 (JP)** | |

(54) **Adaptation of a speech recognition method to individual users and environments with transfer of data between a terminal and a server**

(57) Voice of a user having noises added thereto (noise-added voice) is input by a terminal device and transmitted to a server device. A plurality of acoustic models are stored in advance in a data storage section of the server device. An adapted-model selecting section of the server device selects an acoustic model which is the best adapted to the noise-added voice received by a receiving section from the acoustic models stored in the data storage section. A transmitting section transmits the selected adapted model to the terminal device. A receiving section of the terminal device receives the adapted model from the server device. The received adapted model is stored in a memory. A speech recognition section conducts speech recognition using the adapted model stored in the memory.

FIG. 1

**Description**

**BACKGROUND OF THE INVENTION**

Field of the Invention

The present invention generally relates to a terminal device, a server device and a speech recognition method. More particularly, the present invention relates to a terminal device, a server device and a speech recognition method for conducting a speech recognition process adapted to individual users and individual environments.

Description of the Related Art

Recently, speech recognition technology is increasingly used in mobile phones, portable terminals, car navigation systems, personal computers and the like in order to improve convenience for the users.

The speech recognition technology is used by various users in various environments. In the case of devices such as mobile phones and portable terminals, the type of background noise continuously changes depending on the environment. Similarly, in the case of devices such as stationary terminals for home use, the type of background noise continuously changes due to the sounds on a television and the like. Therefore, various noises are added to a voice produced by the user under such an environment, and acoustic characteristics of speech data to be recognized change continuously. Moreover, even if the same user produces a voice in the same environment, properties of the user's voice change depending on the health condition, aging or the like. Therefore, acoustic characteristics of speech data to be recognized change accordingly. Moreover, acoustic characteristics of speech data to be recognized also changes depending on the type of a microphone attached to a speech recognition system.

Various adaptation technologies are under development in order to implement almost 100% recognition of speech data having different acoustic characteristics.

One example of an adaptation method based on an MLLR (Maximum Likelihood Linear Regression) method is proposed in C. J. Leggetter and P. C. Woodland, "Maximum likelihood linear regression for speaker adaptation of continuous density hidden Markov models", Computer Speech and Language, 1995, Vol. 9, No. 2, pp. 171-186. In the MLLR method, adaptation is conducted by estimating adapted parameters based on a large amount of voice of a user and modifying acoustic models according to these adapted parameters.

An example of an adaptation method based on speaker clustering is proposed in KATO Tsuneo, KUROIWA Shingo, SHIMIZU Tohru, and HIGUCHI Norio, "Speaker Clustering Using Telephone Speech Database of Large Number of Speakers", Technical Report of IEICE, SP2000-10, pp. 1-8, 2000. Moreover, an example of an adaptation method using the sufficient statistics and the distance between speakers' characteristics is proposed in YOSHIZAWA Shinichi, BABA Akira, MATSUNAMI Kanako, MERA Yuichiro, YAMADA Miichi and SHIKANO Kiyohiro, "Unsupervised Training Based on the Sufficient HMM Statistics from Selected Speakers", Technical Report of IEICE, SP2000-89, pp. 83-88, 2000. In the method based on speaker clustering and the method using the sufficient statistics and the distance between speakers' characteristics, adaptation is basically conducted using acoustic models constructed in advance. These acoustic models are constructed using a large amount of speech data of various users in various environments which is obtained in advance. Since speech data close to acoustic characteristics of a user is selected from a database and used to produce an acoustic model, the user need not produce a large amount of voice, which is less burdensome for the user. Moreover, since the acoustic models are constructed in advance, the time required to construct the acoustic models is saved from the adaptation process. Therefore, adaptation can be conducted in a short time.

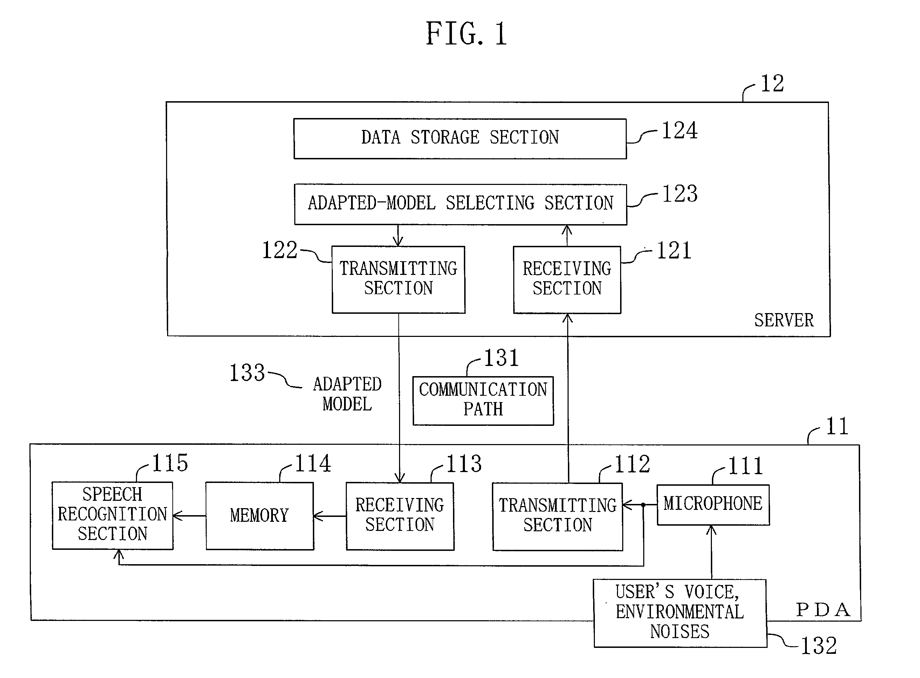

A method for extending and contracting speech spectra in the frequency axis direction according to a speaker (Vocal Tract Normalization) and the like are also proposed. An example of such a method is proposed in Li Lee and Richard C. Rose, "Speaker normalization using efficient frequency warping procedures", ICASSP-96, IEEE International Conference on Acoustics, Speech and Signal Processing, pp. 171-186. A speech recognition device for speaker adaptation using spectral transform is disclosed in FIG. 1 of Japanese Laid-Open Publication No. 2000-276188. In this speech recognition device, a detachable adapted-parameter storage means storing adapted parameters of a user of interest is attached to the speech recognition device, and adaptation is conducted using these adapted parameters.

In the MLLR method, acoustic models are adapted using a large amount of speech data of a user. Therefore, the user must read many sentences aloud for adaptation. This is burdensome for the user.

In the method based on speaker clustering and the method using the sufficient statistics and the distance between speakers' characteristics, a large amount of acoustic models must be stored in a speech recognition device in order to deal with speech data for various acoustic characteristics. This requires the speech recognition device to have a huge memory capacity. However, it is difficult to implement such a huge memory capacity in a terminal device having a limited memory capacity such as a mobile phone and a PDA (Personal Digital Assistant).

The method for extending and contracting speech spectra in the frequency axis direction according to the speaker and the technology disclosed in FIG. 1 of Japanese Laid-Open Publication No. 2000-276188 conducts speaker adaptation. However, it is difficult to conduct adaptation to various changes in acoustic characteristics such as a change in property of noises and speaker's voice by using spectral transform. In the technology disclosed in Japanese Laid-Open Publication No. 2000-276188, a huge number of detachable adapted-parameter storage means storing corresponding adapted parameters must be prepared in order to conduct adaptation to many acoustic characteristics such as various noises and properties of voices of various users. Moreover, the user must determine the type of noise and the current property of his/her voice and attach a corresponding adapted-parameter storage means to the speech recognition device.

## SUMMARY OF THE INVENTION

It is an object of the present invention to provide a terminal device enabling reduction in a required memory capacity.

According to one aspect of the present invention, a terminal device includes a transmitting means, a receiving means, a first storage means, and a speech recognition means. The transmitting means transmits a voice produced by a user and environmental noises to a server device. The receiving means receives from the server device an acoustic model adapted to the voice of the user and the environmental noises. The first storage means stores the acoustic model received by the receiving means. The speech recognition means conducts speech recognition using the acoustic model stored in the first storage means.

In the above terminal device, an acoustic model adapted to a voice produced by a user and environmental noises is obtained from the server device and stored in the first storage means. Accordingly, it is not necessary to store acoustic models corresponding to all situations which may be encountered (but actually, are less likely to be encountered) in advance in the first storage means. This enables reduction in required memory capacity.

Preferably, the receiving means further receives an acoustic model which will be used by the user in future from the server device.

Preferably, the above terminal device further includes a determining means. The determining means compares similarity between the voice of the user having the environmental noises added thereto and an acoustic model which has already been stored in the first storage means with a predetermined threshold value. If the similarity is smaller than the predetermined threshold value, the transmitting means transmits the voice of the user and the environmental noises to the server device.

In the above terminal device, speech recognition is conducted using the acoustic model which has already been stored in the first storage means, if the similarity is equal to or higher than the predetermined threshold value. This enables reduction in transmission and reception of data between the terminal device and the server device.

Preferably, if the similarity is smaller than the threshold value, the determining means prompts the user to determine whether an acoustic model is to be obtained or not. If the user determines that an acoustic model is to be obtained, the transmitting means transmits the voice of the user and the environmental noises to the server device.

In the above terminal device, the voice of the user and the environmental noises are transmitted to the server device only when the user determines that an acoustic model is to be obtained. This enables reduction in transmission and reception of data between the terminal device and the server device.

Preferably, the terminal device further includes a second storage means. The second storage means stores a voice produced by a user. If environmental noises are obtained, the transmitting means transmits the environmental noises and the voice of the user stored in the second storage means to the server device.

In the above terminal device, a voice produced by a user when ambient noises hardly exist can be stored in the second storage means. Accordingly, the server device or the terminal device can produce/use a more accurate adapted model. Moreover, in the above terminal device, voices produced by a plurality of people in quiet environments can be stored in the second storage means. Accordingly, an accurate adapted model can be used in the terminal device used by a plurality of people. Moreover, once the voice of the user is stored, the user need no longer produce a voice every time an adapted model is produced. This reduces the burden on the user.

According to another aspect of the present invention, a terminal device includes a transmitting means, a receiving means, a first storage means, a producing means and a speech recognition means. The transmitting means transmits a voice produced by a user and environmental noises to a server device. The receiving means receives from the server device acoustic-model producing data for producing an acoustic model adapted to the voice of the user and the environmental noises. The first storage means stores the acoustic-model producing data received by the receiving means. The producing means produces the acoustic model adapted to the voice of the user and the environmental noises by using the acoustic-model producing data stored in the first storage means. The speech recognition means conducts speech recognition using the acoustic model produced by the producing means.

In the above terminal device, acoustic-model producing data for producing an acoustic model adapted to a voice produced by a user and environmental noises is obtained from the server device and stored in the first storage means. Accordingly, it is not necessary to store acoustic-model producing data for producing acoustic models corresponding to all situations which may be encountered (but actually, are less likely to be encountered) in advance in the first storage means. This enables reduction in required memory capacity.

Preferably, the receiving means further receives acoustic-model producing data which will be used by the user in future from the server device.

Preferably, the terminal device prompts the user to select a desired environment from various environments, and plays back a characteristic sound of the selected environment.

According to still another aspect of the present invention, a server device includes a storage means, a receiving means, a selecting means and a transmitting means. The storage means stores a plurality of acoustic models. Each of the plurality of acoustic models is a model adapted to a corresponding speaker and a corresponding environment. The receiving means receives from a terminal device a voice produced by a user and environmental noises. The selecting means selects from the storage means an acoustic model which is adapted to the voice of the user and the environmental noises received by the receiving means. The transmitting means transmits the acoustic model selected by the selecting means to the terminal device.

The above server device has the storage means storing a plurality of acoustic models. An acoustic model adapted to a voice of a user of the terminal device and environmental noises is selected from the storage means and transmitted to the terminal device. This enables reduction in memory capacity required for the terminal device.

Moreover, acoustic models produced based on a large amount of data close to acoustic characteristics of voice of the user can be stored in the storage means. Therefore, the user need not utter a large amount of sentences in order to produce an acoustic mode, thereby reducing the burden of the user.

Moreover, an acoustic model close to acoustic characteristics of voice of the user can be produced and stored in advance in the storage means. Accordingly, the time to produce an acoustic model is not required, thereby reducing the time required for an adaptation process. As a result, the terminal device can obtain an adapted model in a short time.

Preferably, the selecting means selects an acoustic model which will be used by a user of the terminal device in future from the storage means.

According to yet another aspect of the present invention, a server device includes a storage means, a receiving means, a producing means, and a transmitting means. The storage means stores a plurality of acoustic models. Each of the plurality of acoustic models is a model adapted to a corresponding speaker and a corresponding environment. The receiving means receives from a terminal device a voice produced by a user and environmental noises. The producing means produces an acoustic model adapted to the voice of the user and the environmental noises, based on the voice of the user and the environmental noises received by the receiving means and the plurality of acoustic models stored in the storage means. The transmitting means transmits the acoustic model produced by the producing means to the terminal device.

The above server device has the storage means storing a plurality of acoustic models. An acoustic model adapted to a voice of a user of the terminal device and environmental noises is produced and transmitted to the terminal device. This enables reduction in memory capacity required for the terminal device.

Preferably, the producing means produces an acoustic model which will be used by a user of the terminal device in future.

According to a further aspect of the present invention, a server device includes a storage means, a receiving means, a selecting means and a transmitting means. The storage means stores a plurality of acoustic models. Each of the plurality of acoustic models is a model adapted to a corresponding speaker and a corresponding environment. The receiving means receives from a terminal device a voice produced by a user and environmental noises. The selecting means selects from the storage means acoustic-model producing data for producing an acoustic model which is adapted to the voice of the user and the environmental noises received by the receiving means. The acoustic-model producing data includes at least two acoustic models. The transmitting means transmits the acoustic-model producing data selected by the selecting means to the terminal device.

In the above server device, acoustic-model producing data for producing an acoustic model adapted to a voice of a user of the terminal device and environmental noises is selected from the storage means and transmitted to the terminal device. This enables reduction in memory capacity required for the terminal device.

Preferably, the selecting means selects acoustic-model producing data which will be used by a user of the terminal device in future from the storage means.

Preferably, each of the plurality of acoustic models stored in the storage means is adapted also to a tone of voice of a corresponding speaker.

In the above server device, acoustic models each adapted also to a tone of voice of a corresponding speaker are stored in the storage means. This enables the user of the terminal device to obtain a higher recognition rate.

Preferably, each of the plurality of acoustic models stored in the storage means is adapted also to characteristics of an inputting means for obtaining a voice produced by a speaker in order to produce the acoustic model.

In the above server device, acoustic models each adapted also to characteristics of the inputting means are stored in the storage means. This enables the user of the terminal device to obtain a higher recognition rate.

According to a still further aspect of the present invention, a speech recognition method includes steps (a) to (c). In step (a), a plurality of acoustic models are prepared. Each of the plurality of acoustic models is a model adapted to a corresponding speaker, a corresponding environment, and a corresponding tone of voice. In step (b), an acoustic model adapted to a voice produced by a user and environmental noises is obtained based on the voice of the user, the environmental noises and the plurality of acoustic models. In step (c), speech recognition is conducted using the obtained acoustic model.

In the above speech recognition method, acoustic models each adapted also to a tone of voice of a corresponding speaker are prepared. This enables the user to obtain a higher recognition rate.

Preferably, each of the plurality of acoustic models is adapted also to characteristics of an inputting means for obtaining a voice produced by a speaker in order to produce the acoustic model.

In the above speech recognition method, acoustic models each adapted also to characteristics of the inputting means are prepared. This enables the user to obtain a higher recognition rate.

## BRIEF DESCRIPTION OF THE DRAWINGS

FIG. **1** is a block diagram showing the overall structure of a speech recognition system according to a first embodiment of the present invention;

FIG. **2** is a flowchart illustrating operation of the speech recognition system of FIG. 1;

FIG. **3** shows an example of acoustic models stored in a data storage section in a server of FIG. **1**;

FIG. **4** is a block diagram showing the overall structure of a speech recognition system according to a second embodiment of the present invention;

FIG. **5** is a flowchart illustrating operation of the speech recognition system of FIG. **4**;

FIG. **6** shows an example of acoustic models and GMMs stored in a memory of a PDA;

FIG. **7** is a block diagram showing the overall structure of a speech recognition system according to a third embodiment of the present invention;

FIG. **8** is a flowchart illustrating operation of the speech recognition system of FIG. **7**;

FIG. **9** illustrates a flow of a process of producing an adapted model using an environmental-noise adaptation algorithm;

**FIG. 10** is a block diagram showing the overall structure of a speech recognition system according to a fourth embodiment of the present invention;

FIG. **11** is a flowchart illustrating operation of the speech recognition system of FIG. **10**;

FIG. **12** shows an example of display on a touch panel;

FIG. **13** is a block diagram showing the structure of a PDA in a speech recognition system according to a fifth embodiment of the present invention;

FIG. **14** is a flowchart illustrating operation of the speech recognition system according to the fifth embodiment of the present invention;

FIG. **15** is a block diagram showing the structure of a mobile phone in a speech recognition system according to a sixth embodiment of the present invention;

FIG. **16** is a flowchart illustrating operation of the speech recognition system according to the sixth embodiment of the present invention;

FIG. **17** is a block diagram showing the overall structure of a speech recognition system according to a seventh embodiment of the present invention; and

FIG. **18** is a flowchart illustrating operation of the speech recognition system of FIG. **17**.

## DESCRIPTION OF THE PREFERRED EMBODIMENTS

Hereinafter, embodiments of the present invention will be described in detail with reference to the accompanying drawings. Note that the same or corresponding portions are denoted with the same reference numerals and characters throughout the figures, and detailed description thereof will not be repeated.

(First Embodiment)

[Structure of the speech recognition system]

FIG. **1** shows the overall structure of a speech recognition system according to the first embodiment. This speech recognition system includes a PDA (Personal Digital Assistant) **11** and a server **12**. The PDA **11** and the server **12** transmit and receive data to and from each other via a communication path **131**.

The PDA **11** includes a microphone **111**, a transmitting section **112**, a receiving section **113**, a memory **114** and a speech recognition section **115**. The microphone **111** is a data input means for inputting information such as a voice of a user of the PDA **11** and noises around the PDA **11** (environmental noises). The transmitting section **112** transmits data which is input by the microphone **11** to the server **12**. The receiving section **113** receives an adapted model transmitted from the server **12**. The adapted model received by the receiving section **113** is stored in the memory **114**. The speech recognition section **115** conducts speech recognition using the adapted models stored in the memory **114**.

The server **12** includes a receiving section **121**, a transmitting section **122**, an adapted-model selecting section **123**, and a data storage section **124**. The data storage section **124** stores a plurality of acoustic models and a plurality of selection models in a one-to-one correspondence. Each selection model is a model for selecting a corresponding acoustic model. The receiving section **121** receives data transmitted from the PDA **11**. The adapted-model selecting section **123** selects an acoustic model which is adapted to an environment and/or a situation where the PDA **11** is used from the plurality of acoustic models stored in the data storage section **124**. The environment herein means noises around the location where the PDA **11** is used, and the like. The situation herein means intended use of an application operated according to the speech recognition process of the speech recognition section **115** of the PDA **11**, and the like. The transmitting section **122** transmits the adapted model selected by the adapted-model selecting section **123** to the PDA **11**.

[Operation of the speech recognition system]

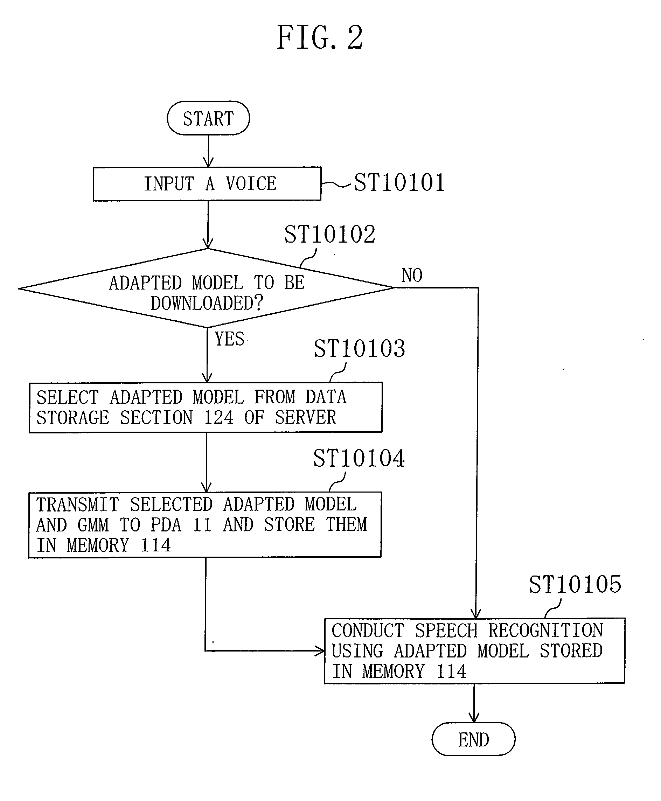

Hereinafter, operation of the speech recognition system having the above structure will be described with reference to FIG. **2**. It is herein assumed that the user uses the PDA **11** at an exhibition site.

[Step **ST10101**]

The user inputs speech data such as "obtain an acoustic model", "adapt" or "speech recognition" using the microphone **111** mounted to the PDA **11**. When the user inputs a voice, noises at the exhibition site are added to this voice. Hereinafter, voice with noises added thereto is sometimes referred to as "noise-added voice".

[Step **ST10102**]

The PDA **11** prompts the user to determine whether an acoustic model is to be obtained or not. If the user determines that an acoustic model is to be obtained (yes in step **ST10102**), the voice obtained in step **ST10101**, that is, the voice with noises added thereto, is transmitted from the transmitting section **112** of the PDA **11** to the server **12**, and the routine proceeds to step **ST10103**. On the other hand, if the user determines that an acoustic model is not to be obtained (no in step **ST10102**), no noise-added voice is transmitted to the server **12**, and the routine proceeds to step **ST10105**.

[Step **ST10103**]

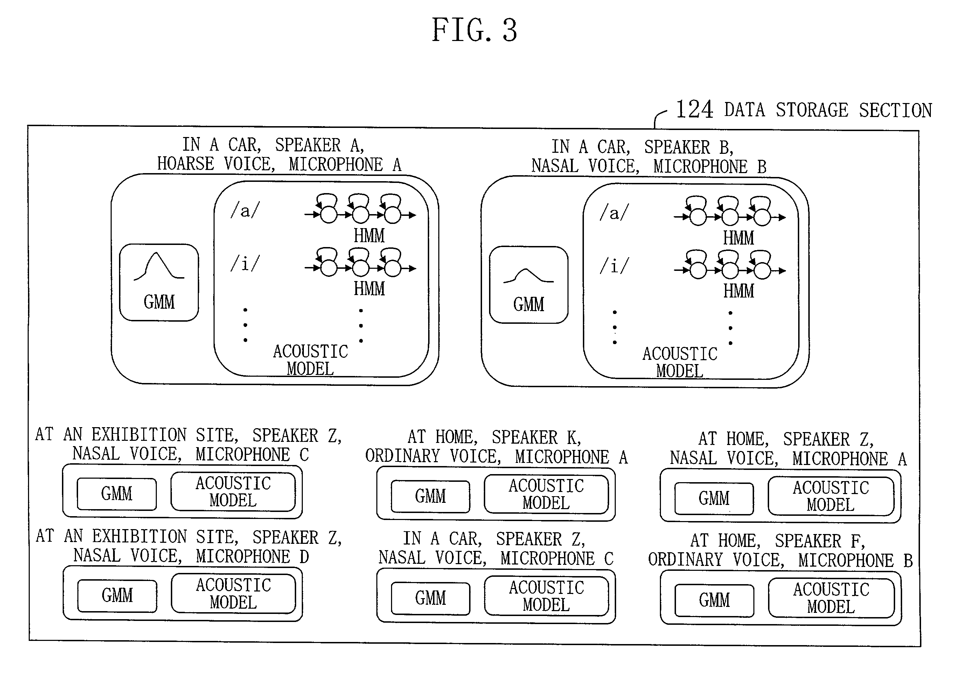

A plurality of acoustic models are stored in advance in the data storage section **124** of the server **12**. The plurality of acoustic models are adapted to characteristics of a microphone which was used to obtain speech data produced by speakers in order to produce acoustic models, various speakers in various noise environments, and various tones of voices. FIG. **3** shows an example of acoustic models which are stored in advance in the data storage section **124**. In the illustrated example, a plurality of acoustic models (noise-added models) stored in the data storage section **124** are produced based on speech data obtained by speakers such as A, B, C, Z in an ordinary voice, a hoarse voice, a nasal voice and the like using microphones A, B, C, D and the like in noise environments such as in a car, at home and at an exhibition site. Each of the plurality of acoustic models includes a plurality of acoustic models of phonemes (HMMs (hidden Markov models)). The number of acoustic models of phonemes included in each acoustic model and the types of acoustic models of phonemes vary depending on the accuracy of speech recognition (such as context-dependent and context-independent), language (such as Japanese and English), an application and the like. GMMs (Gaussian Mixture Models) are also stored in advance in the data storage section **124** in order to select one of the plurality of acoustic models which is adapted to the environment and/or the situation where the PDA 11 is used as an adapted model. The GMMs are produced based on the speech data used to produce the adapted models without distinguishing the phonemes. The GMMs and the acoustic models are stored in the data storage section **124** in pairs. A GMM is a simple model which represents characteristics of a corresponding acoustic model.

The receiving section **121** of the server **12** receives noise-added voice of the user from the PDA **11**. The adapted-model selecting section **123** inputs the noise-added voice received by the receiving section **121** to the GMM corresponding to every acoustic model stored in the data storage section **124**. The adapted-model selecting section **123** then selects an acoustic model corresponding to a GMM having the highest likelihood as an adapted model. The selected acoustic model is a model which is the best adapted to ambient noises and the user.

[Step **ST10104**]

The transmitting section **122** of the server **12** transmits the adapted model **133** selected by the adapted-model selecting section **123** to the PDA **11**.
The receiving section **113** of the PDA **11** receives the adapted model **133** from the server **12**. The adapted model **133** received by the receiving section **113** is stored in the memory **114**. The acoustic model (adapted model) which has been stored in the memory **114** is replaced with this newly downloaded adapted model.

[Step **ST10105**]

The speech recognition section **115** conducts speech recognition using the adapted model stored in the memory **114**. If the user determines in step **ST10102** that an acoustic model is to be obtained, speech recognition is conducted using the adapted model downloaded from the server **12** in step **ST10103**. On the other hand, if the user determines in step **ST10102** that an acoustic model is not to be obtained, no adapted model is downloaded, and speech recognition is conducted using the adapted model which has already been stored in the memory **114**.
In the speech recognition system of the first embodiment, adaptation is conducted in the server **12** and recognition is conducted in the PDA **11**. Since the server **12** has a large storage capacity, adaptation using a complicated model can be conducted. This enables improvement in recognition rate. Moreover, the recognition function can be used in the PDA **11** even if the server **12** is down or the server **12** is subjected to crossing of lines.
It is not necessary to store adapted models corresponding to all situations which may be encountered (but actually, are less likely to be encountered) in the memory **114** of the PDA **11**. An adapted model which is suitable for the encountered situation need only be obtained from the server **12** and stored in the memory **114** of the PDA **11**. This enables reduction in capacity of the memory **114** of the PDA **11**.
Moreover, the user of the PDA **11** conducts speech recognition by using an adapted model which is adapted to noises around the PDA **11**, characteristics of the user, tone of a user's voice, and characteristics of the microphone. Accordingly, a high recognition rate can be obtained.
Moreover, acoustic models produced based on a large amount of data close to acoustic characteristics of voice of the user are stored in advance in the data storage section **124** of the server **12**. This eliminates the need for the user to produce a large amount of voice to produce an acoustic model.
Moreover, acoustic models produced based on speech data close to acoustic characteristics of voice of the user are stored in advance in the data storage section **124** of the server **12**. This saves the time to produce an acoustic model.
Moreover, the previously used adapted model has been stored in the memory **114** of the PDA **11**. Therefore, the adapted model can be reused.

[Modification]

In the above example, the adapted model which has already been stored in the memory **114** is replaced with the adapted model downloaded from the server **12** (step **ST10103**). However, the newly downloaded adapted model may alternatively be added to adapted models which have already been stored in the memory **114**. In this case, the speech recognition process in step **ST10105** is conducted as follows: if the user determines in step **ST10102** that an acoustic model is to be obtained, speech recognition is conducted using an adapted model downloaded from the server **12** in step **ST10103**. If the user determines in step **ST10102** that an acoustic model is not to be obtained, no adapted model is downloaded, and an adapted model that is close to the voice that was input in step **ST10101** is selected from the adapted models which have already been stored in the memory **114**. Speech recognition is conducted using the selected adapted model.
The adapted-model selecting section **123** of the server **12** may select an acoustic model according to the situation where the PDA **11** is used. For example, when an application relating to security (such as an application for processing confidential information by speech recognition, and an application for driving a car by speech recognition) is used, the adapted-model selecting section **123** of the server **12** may select an acoustic model which is more accurately adapted to the situation. In this case, the PDA **11** may transmit information of an active application to the adapted-model selecting section **123** of the server **12** in order to notify the server **12** of the situation where the PDA **11** is used (the level of importance of speech recognition). Alternatively, the PDA **11** may prompt the user to input the level of importance in order to transmit the information (the situation where the PDA **11** is used) to the adapted-model selecting section **123** of the server **12**.

The acoustic models of phonemes are not limited to HMMs.

The PDA **11** may transmit an uttered text data such as "obtain an acoustic model" to the server **12**. In this case, a specialized GMM can be produced based on voice formed only from phonemes contained in the text, and an adapted model can be selected based on the voice formed only from phonemes. Therefore, an adapted model can be selected with high accuracy. If a GMM is produced from the voice of all phonemes on a speaker-by-speaker basis, characteristics as a speaker that can be represented by the GMM may become ambiguous.

The PDA **11** may transmit a feature vector resulting from transform of voice of the user (such as a cepstrum coefficient) to the server **12**.

The GMMs may not be stored in the data storage section **124** of the server **12**, and the adapted-model selecting section **123** may select an adapted model using the acoustic models instead of the GMMs. In other words, the adapted-model selecting section **123** may select an acoustic model having the maximum likelihood as an adapted model.

The **PDA 11** may conduct speech recognition using the same microphone as that for inputting the information **132** of the **PDA 11**. In this case, speech recognition can be conducted using an adapted model in view of characteristics of the microphone.

A stationary terminal such as a television, a personal computer and a car navigation system may be used instead of the PDA **11**.

The communication path **131** may be a cable (such as a telephone line, an Internet line and a cable television line), a communications network, and a broadcasting network (such as broadcasting satellite (BS)/communications satellite (CS) digital broadcasting and terrestrial digital broadcasting).

The server and the terminal may be disposed close to each other in a three-dimensional space. For example, the server **12** may be a television or a set-top box, and the PDA **11** (terminal) may be a remote controller of the television.

(Second Embodiment)

[Structure of the speech recognition system]

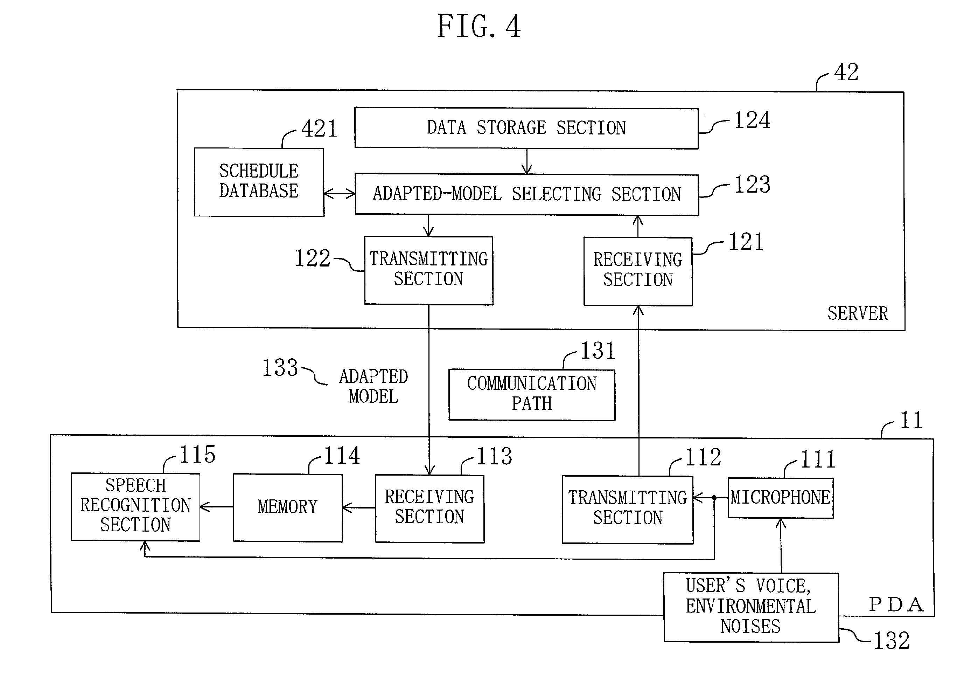

FIG. **4** shows the overall structure of a speech recognition system according to the second embodiment. This speech recognition system includes a PDA **11** and a server **42.** The PDA **11** and the server **42** transmit and receive data to and from each other via a communication path **131**.

The server **42** includes a receiving section **121**, a transmitting section **122**, an adapted-model selecting section **123**, a data storage section **124**, and a schedule database **421**. Schedules of the user of the PDA **11** (such as destination, and date and time) are stored in the schedule database **421**.

[Operation of the speech recognition system]

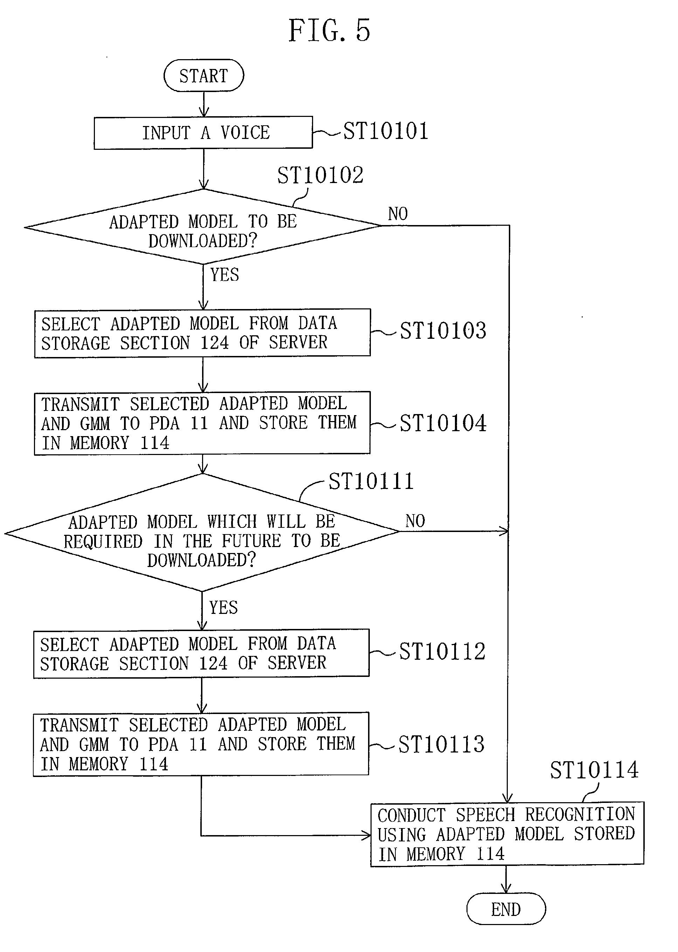

Hereinafter, operation of the speech recognition system having the above structure will be described with reference to FIG. **5.** It is herein assumed that a user **X** uses the PDA **11** at an exhibition site.

The user **X** downloads both an acoustic model adapted to noises at the exhibition site and an ordinary voice of the user **X** and GMMs corresponding to these acoustic models to the memory **114** of the **PDA 11** in the same manner as that described in the first embodiment (steps **ST10101** to **ST10104**).

[Step **ST10111**]

The PDA **11** prompts the user **X** to determine whether an adapted model which will be used in the future is to be obtained or not. If the user **X** determines that an adapted model which will be used in the future is to be obtained (yes in step **ST10111**), the transmitting section **112** of the PDA **11** transmits a request signal to the server **42,** and the routine proceeds to step **ST10112.** On the other hand, if the user **X** determines that an adapted model which will be used in the future is not to be obtained (no in step **ST10111**), the transmitting section **112** of the PDA **11** does not transmit a request signal, and the routine proceeds to step **ST10114**. It is herein assumed that the user **X** determines in step **ST10111** that an adapted model which will be used in the future is to be obtained.

[Step **ST10112**]

The request signal from the PDA **11** is applied to the adapted-model selecting section **123** via the receiving section **121** of the server **42**. In response to the request signal, the adapted-model selecting section **123** predicts a situation which may be encountered by the user **X** in the future, and selects an acoustic model adapted to the predicted situation from the data storage section **124.** This selection operation will now be described in more detail. In steps **ST10101** to **ST10104**, an acoustic model adapted to the noises at the exhibition site and the ordinary voice of the user **X** is downloaded to the memory **114** of the PDA **11** as an adapted model. In view of this, the adapted-model selecting section **123** selects acoustic models such as "acoustic model adapted to noises at an exhibition site and a hoarse voice of the user **X** having a cold", "acoustic model adapted to noises at an exhibition site and a voice of the user **X** talking fast", "acoustic model adapted to noises at an exhibition site and a voice of the user **X** talking in whispers" and "acoustic model adapted to noises at an assembly hall which are acoustically close to noises at an exhibition site and an ordinary voice of the user **X**" as acoustic models adapted to the situation which may be encountered by the user **X** in the future. Alternatively, the adapted-model selecting section **123** may select an acoustic model with reference to the schedules of the user **X** stored in the schedule database **421**. It is herein assumed that "part-time job at a construction site", "party at a pub" and "trip to Europe (English-speaking countries and French-speaking countries)" are stored in the schedule database **421** as future schedules of the user **X**. In this case, the adapted-model selecting section **123** selects acoustic models such as "acoustic model adapted to noises at a construction site and an ordinary voice of the user **X**", "acoustic model adapted to noises at a pub and an ordinary voice of the user **X**", "acoustic model adapted to noises at an exhibition site and a voice of the user **X** speaking English" and "acoustic model adapted to noises at an exhibition site and a voice of the user **X** speaking French" as acoustic models adapted to the situation which may be encountered by the user **X** in the future.

[Step **ST10113**]

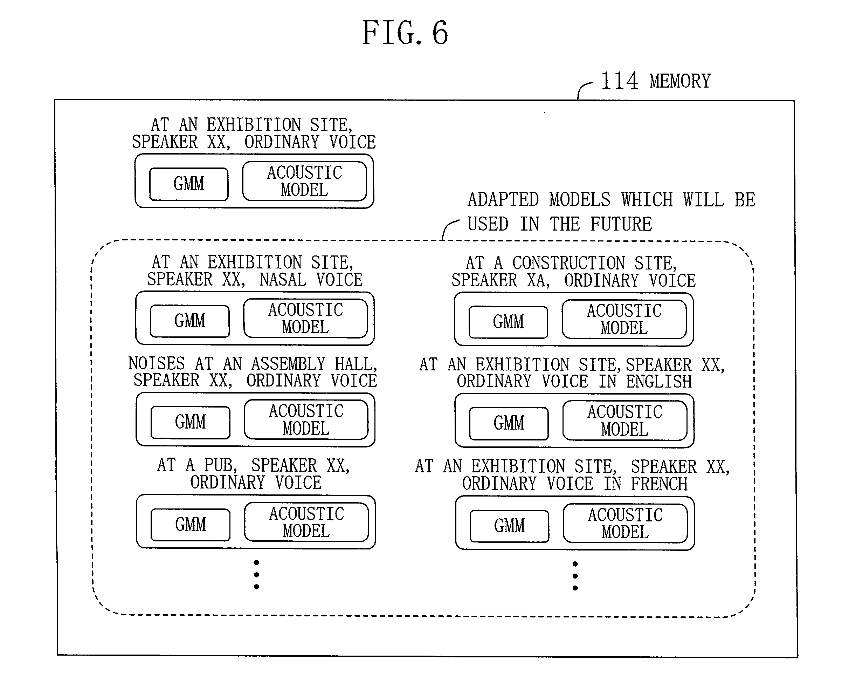

The acoustic models (adapted models) thus selected and GMMs corresponding to the selected models are transmitted from the transmitting section **122** of the server **42** to the PDA **11**. The receiving section **113** of the PDA **11** receives the adapted models and the GMMs from the server **42**. The adapted models and the GMMs received by the receiving section **113** are stored in the memory **114**. In this example, the newly downloaded acoustic models and GMMs are added to the acoustic models and GMMs which have already been stored in the memory **114**. FIG. **6** shows an example of the acoustic models and the GMMs thus accumulated in the memory **114**.

[Step **ST10114**]

The speech recognition section **115** conducts speech recognition using an adapted model stored in the memory **114**. If the user determines in step **ST10102** that an acoustic model is to be obtained, speech recognition is conducted using an adapted model downloaded from the server **42** in step **ST10103**. If the user determines in step **ST10102** that an acoustic model is not to be obtained, speech recognition is conducted using an adapted model which has already been stored in the memory **114.**

The user **X** then uses speech recognition while working at the construction site. The user **X** inputs voice of the user **X** at the construction site using the microphone **111** of the PDA **11** (step **ST10101).** The user **X** does not request download of an adapted model (step **ST10102).** The speech recognition section **115** then inputs the voice to each GMM stored in the memory **114** and selects an adapted model corresponding to a GMM having the maximum likelihood with respect to the voice (step **ST10111**). The speech recognition section **115** conducts speech recognition using the selected adapted model (step **ST10114**).

A user **Y,** a co-worker of the user **X** at the construction site, then uses the **PDA 11** at the construction site. The user **Y** inputs voice of the user **Y** at the construction site using the microphone **111** of the PDA **11** (step **ST10101**). The user **Y** requests download of an adapted model (step **ST10102**). As a result, an acoustic model adapted to noises at a construction site and an ordinary voice of the user **Y** (adapted model) and a GMM corresponding to this model are downloaded to the memory **114** of the PDA **11** (steps **ST10103** to **ST10104**). The user **Y** does not request an adapted model that will be required in the future (step **ST10111**). The user **Y** conducts speech recognition by the speech recognition section **115** using the adapted model downloaded to the memory **114** (step **ST10114**).

The speech recognition system of the second embodiment provides the following effects in addition to the effects obtained by the first embodiment.

A situation which may be encountered is predicted and an adapted model of the predicted situation is stored in advance in the memory **114** of the PDA **11**. Therefore, the user of the PDA **11** can use an adapted model without communicating with the server **42.** Moreover, adapted models of a plurality of users can be stored in the memory **114** of the PDA **11**. Therefore, a plurality of users of the PDA **11** can use an adapted model without communicating with the server **42**.

[Modification]

In the above example, an adapted model which will be used in the future is obtained according to the determination of the user of the PDA **11**. However, such an adapted model may be automatically obtained by the adapted-model selecting section **123** of the server **42**. For example, such an adapted model may be obtained in the following manner with reference to the schedules of the user stored in the schedule database **421**. It is now assumed that "from 10 a.m., part-time job at the construction site" is stored in the schedule database **421** as a schedule of the user **X** of the **PDA 11.** In this case, the adapted-model selecting section **123** selects an "acoustic model adapted to noises at a construction site and an ordinary voice of the user **X**" from the data storage section **124** at a predetermined time before 10 a.m., e.g., at 9:50 a.m. The selected model is transmitted from the transmitting section **122** to the PDA **111** and stored in the memory **114.** Accordingly, at 10 a.m. (the time the user **X** starts working), speech recognition can be conducted by the PDA **111** using the "acoustic model adapted to noises at a construction site and an ordinary voice of the user **X**". If the PDA **11** has a GPS (Global Positioning System) function, the adapted-model selecting section **123** may select an "acoustic model adapted to noises at a construction site and an ordinary voice of the user **X**" from the data storage section **124** as soon as the user **X** carrying the PDA **11** comes somewhat close to the construction site.
In the above example, the schedule database **421** is provided within the server **42**. However, the schedule database **421** may alternatively be provided within the PDA **11**.
Moreover, in the above example, both an adapted model selected by the adapted-model selecting section **123** and a GMM corresponding to the selected adapted model are downloaded to the PDA **11**. However, such a GMM may not be downloaded to the PDA **11**. In this case, the selected adapted model itself may be used to select an adapted model from the memory **114** of the PDA **11**.
The user name may be input together with the voice in step **ST10101** and the user name may be matched with the downloaded adapted model. In this case, an adapted model can be selected in step **ST10114** by inputting the user name.
The server and the terminal may be disposed close to each other in a three-dimensional space. For example, the server **12** may be a television or a set-top box, and the PDA **11** (terminal) may be a remote controller of the television.

(Third Embodiment)

[Structure of the speech recognition system]

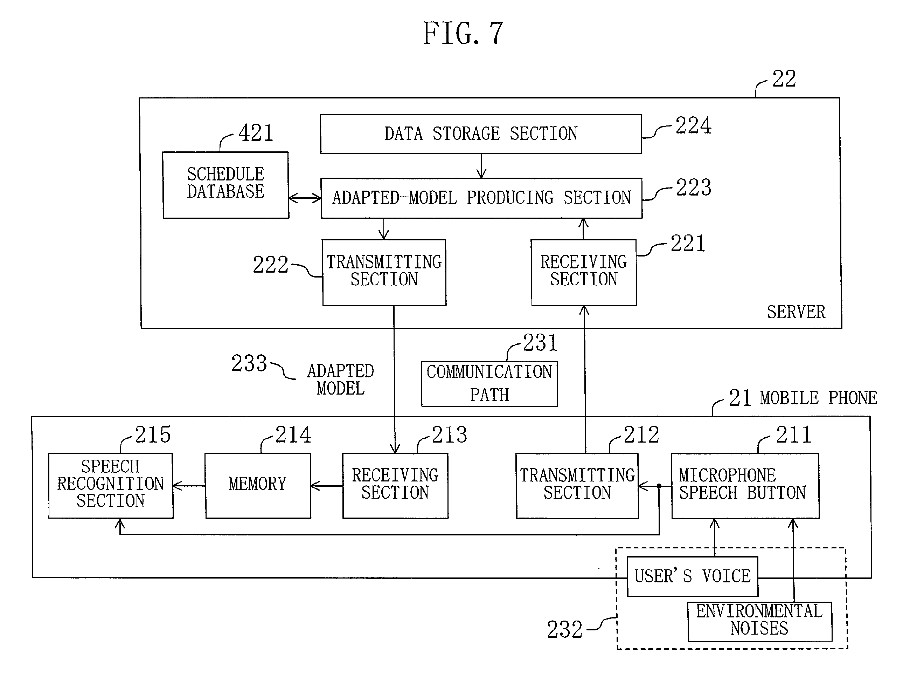

FIG. 7 shows the overall structure of a speech recognition system according to the third embodiment. This speech recognition system includes a mobile phone **21** and a server **22**. The mobile phone **21** and the server **22** transmit and receive data to and from each other via a communication path **231**.
The mobile phone **21** includes a data input section **211**, a transmitting section **212**, a receiving section **213**, a memory **214** and a speech recognition section **215**. The data input section **211** inputs information such as a voice of a user of the mobile phone **21** and noises around the mobile phone **21**. The data input section **211** includes a speech trigger button and a microphone. The speech trigger button is provided in order to input the user's voice and the environmental noises independently of each other. The microphone inputs the voice of the user of the mobile phone **21**, the noises around the mobile phone **21**, and the like. The transmitting section **212** transmits the data which is input by the data input section **211** to the server **22**. The receiving section **213** receives an adapted model transmitted from the server **22**. The adapted model received by the receiving section **213** is stored in the memory **214**. The speech recognition section **215** conducts speech recognition using the adapted model stored in the memory **214**.
The server **22** includes a receiving section **221**, a transmitting section **222**, an adapted-model producing section **223**, a data storage section **224**, and a schedule database **421**. Data for producing an adapted model (hereinafter, referred to as adapted-model producing data) is stored in the data storage section **224**. The adapted-model producing data includes a plurality of acoustic models, GMMs corresponding to the plurality of acoustic models, and speech data of a plurality of speakers. The receiving section **221** receives the data transmitted from the mobile phone **21**. The adapted-model producing section **223** produces an adapted model based on the data received by the receiving section **221** and the data stored in the data storage section **224**. The transmitting section **222** transmits the adapted model produced by the adapted-model producing section **223** to the mobile phone **21**.

[Operation of the speech recognition system]

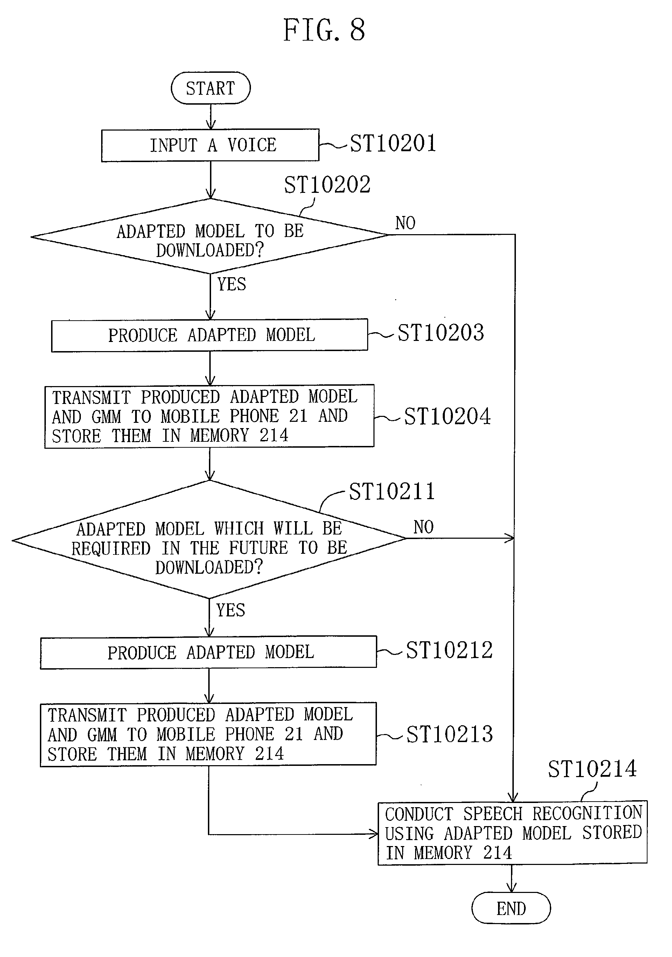

Hereinafter, operation of the speech recognition system having the above structure will be described with reference to FIG. **8**. It is herein assumed that the user uses the mobile phone **21** on a train.

[Step **ST10201**]

The user of the mobile phone **21** inputs voice of the user and ambient noises obtained while the user is not producing the voice independently of each other by using the microphone and speech trigger button **211** mounted to the mobile phone **21**. More specifically, the user inputs his/her voice by speaking to the microphone while pressing the speech trigger button. If the speech trigger button is not pressed, ambient noises are input via the microphone. The voice produced by the user while the train stops is input as voice of the user, and noises and voices of people around the user produced while the train is running are input as ambient noises.

[Step **ST10202**]

The mobile phone **21** prompts the user to determine whether an acoustic model is to be obtained or not. If the user determines that an acoustic model is to be obtained (yes in step **ST10202**), the data which was input from the data input section **211** in step **ST10201** is transmitted from the transmitting section **212** of the mobile phone **21** to the server **22**, and the routine proceeds to step **ST10203**. On the other hand, if the user determines that an acoustic model is not to be obtained (no in step **ST10202**), no data is transmitted to the server **22,** and the routine proceeds to step **ST10214**.

[Step **ST10203**]

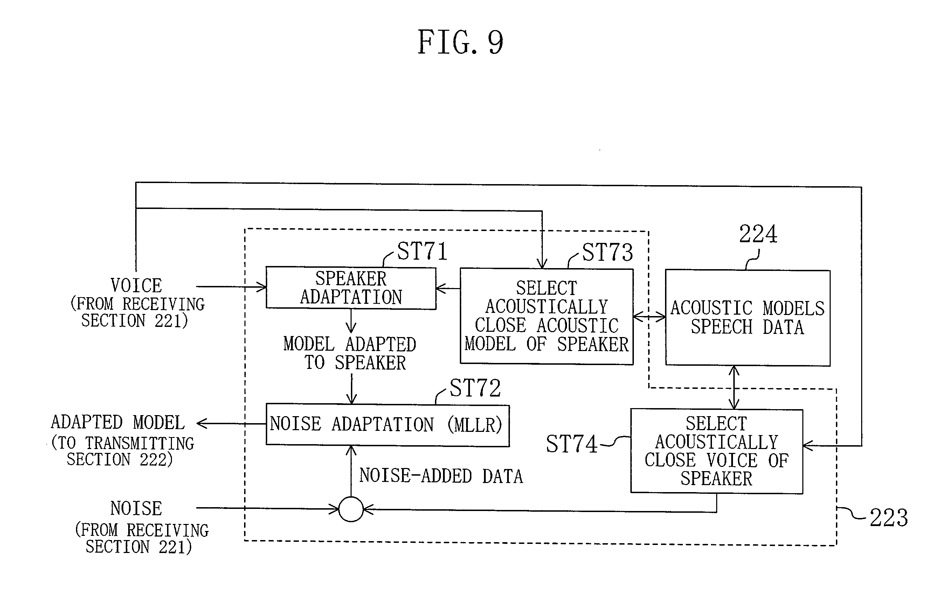

The receiving section **221** of the server **22** receives the user's voice and the ambient noises from the mobile phone **21**.
The adapted-model producing section **223** produces an adapted model adapted to the environment where the mobile phone **21** is used based on at least two of the acoustic models stored in the data storage section **224** and the data received by the receiving section **221**.
The adapted-model producing section **223** produces an adapted model by using an environmental-noise adaptation algorithm (YAMADA Miichi, BABA Akira, YOSHIZAWA Shinichi, MERA Yuichiro, LEE Akinobu, SARUWATARI Hiroshi and SHIKANO Kiyohiro, "Performance of Environment Adaptation Algorithms in Large Vocabulary Continuous Speech Recognition", IPSJ SIGNotes, 2000-SLP-35, pp. 31-36, 2001). Hereinafter, how an adapted model is produced using the environmental-noise adaptation algorithm will be described with reference to FIG. **9**. A plurality of acoustic models and speech data of a plurality of speakers are stored in advance in the data storage section **124** of the server **22**. In the environmental-noise adaptation algorithm, speaker adaptation is conducted based on the voice by using the sufficient statistics and the distance between speakers' characteristics. In the adaptation method using the sufficient statistics and the distance between speakers' characteristics, an acoustic model of a speaker which is acoustically close to the voice of the user is selected from the data storage section **224** (**ST73**). Thereafter, speaker adaptation is conducted using the selected acoustic model according to the adaptation method using the sufficient statistics and the distance between speakers' characteristics (**ST71**). In this case, speaker adaptation is conducted using the noise-free voice received from the mobile phone **21**. This enables implementation of accurate speaker adaptation. Thereafter, speech data of speakers which are acoustically close to the voice of the user is selected from the data storage section **224** (**ST74**), and the data of ambient noises received from the mobile phone **21** is added to the selected speech data. Noise-added speech data is thus produced. Noise adaptation is then conducted using the noise-added speech data according to MLLR (step **ST72**). The adapted model is thus produced.

[Step **ST10204**]

The adapted model **233** produced by the adapted-model producing section **223** is transmitted from the transmitting section **222** to the receiving section **213** of the mobile phone **21**. The adapted model **233** received by the receiving section **213** of the mobile phone **21** is stored in the memory **214**. In this example, the newly downloaded acoustic model and GMM are added to the acoustic models and GMMs which have already been stored in the memory **214**.

[Step **ST10211**]

The mobile phone **21** prompts the user to determine whether an adapted model which will be used in the future is to be obtained or not. If the user determines that an adapted model which will be used in the future is to be obtained (yes in step **ST10211**), the transmitting section **212** of the mobile phone **21** transmits a request signal to the server **22**, and the routine proceeds to step **ST10212**. On the other hand, if the user determines that an adapted model which will be used in the future is not to be obtained (no in step **ST10211**), the transmitting section **212** does not transmit a request signal, and the routine proceeds to step **ST10214**.

[Step **ST10212**]

In response to the request signal from the mobile phone **21**, the adapted-model producing section **223** predicts a situation which may be encountered by the user, and produces an acoustic model adapted to the predicted situation. An acoustic model to be produced is selected in the same manner as that described in step **ST10112** in FIG. **5,** and is produced in the same manner as that described above in step **ST10203**.

[Step **ST10213**]

The acoustic model (adapted model) thus produced and a GMM corresponding to the produced model are transmitted from the transmitting section **222** of the server **22** to the mobile phone **21**. The receiving section **213** of the mobile phone **21** receives the adapted model and the GMM from the server **22**. The adapted model and the GMM received by the receiving section **213** are stored in the memory **214**. In this example, the newly downloaded acoustic model and GMM are added to the acoustic models and GMMs which have already been stored in the memory **214**.

[Step **ST10214**]

The speech recognition section **215** conducts speech recognition using an adapted model stored in the memory **214** in the same manner as that described in step **ST10114** of FIG. **5**.
As has been described above, according to the third embodiment, it is not necessary to store acoustic models corresponding to all situations which may be encountered (but actually, are less likely to be encountered) in the memory **214** of the mobile phone **21**. An acoustic model suitable for the encountered situation need only be obtained from the server **22** and stored in the memory **214**. This enables reduction in capacity of the memory **214** of the mobile phone **21**.
Moreover, the user of the mobile phone **21** can conduct speech recognition using an adapted model adapted to noises around the mobile phone **21**, characteristics of the user, tone of the user's voice, and the like. This enables implementation of a high recognition rate.
Moreover, an adapted model can be produced in the server **22** in view of the situation where the mobile phone **21** is used. Accordingly, an acoustic model which is better adapted to the situation where the mobile phone **21** is used can be transmitted to the mobile phone **21**.

[Modification]

The voice the user and ambient noises obtained while the user is not producing the voice may be automatically distinguished from each other by using speech models and noise models.
Moreover, the acoustic models are not limited to HMMs.
An improved method of the method using the sufficient statistics and the distance between speakers' characteristics (YOSHIZAWA Shinichi, BABA Akira, MATSUNAMI Kanako, MERA Yuichiro, YAMADA Miichi and SHIKANO Kiyohiro, "Unsupervised Traning Based on the Sufficient HMM Statistics from Selected Speakers", Technical Report of IEICE, SP2000-89, pp. 83-88, 2000) may be used in the adapted-model producing section **223**. More specifically, adaptation may be conducted using acoustic models regarding a plurality of speakers and noises and GMMs corresponding to these acoustic models, instead of using acoustic models regarding a plurality of speakers.
The adapted-model producing section **223** may conduct adaptation according to another adaptation method using an acoustic model, such as MAP estimation and an improved method of MLLR.
Uttered text data such as "obtain an acoustic model" may be transmitted to the server **22** as the information **232** of the mobile phone **21**.
A feature vector such as cepstrum coefficients resulting from transform of voice may be transmitted to the server **22** as the information **232** of the mobile phone **21**.
A stationary terminal such as a television, a personal computer and a car navigation system may be used instead of the mobile phone **21** serving as a terminal device.
The communication path **231** may be a cable (such as a telephone line, an Internet line and a cable television line), a communications network, and a broadcasting network (such as BS/CS digital broadcasting and terrestrial digital broadcasting).
The server and the terminal may be disposed close to each other in a three-dimensional space. For example, the server **22** may be a television or a set-top box, and the mobile phone **21** (terminal) may be a remote controller of the television.

(Fourth Embodiment)

[Structure of the speech recognition system]

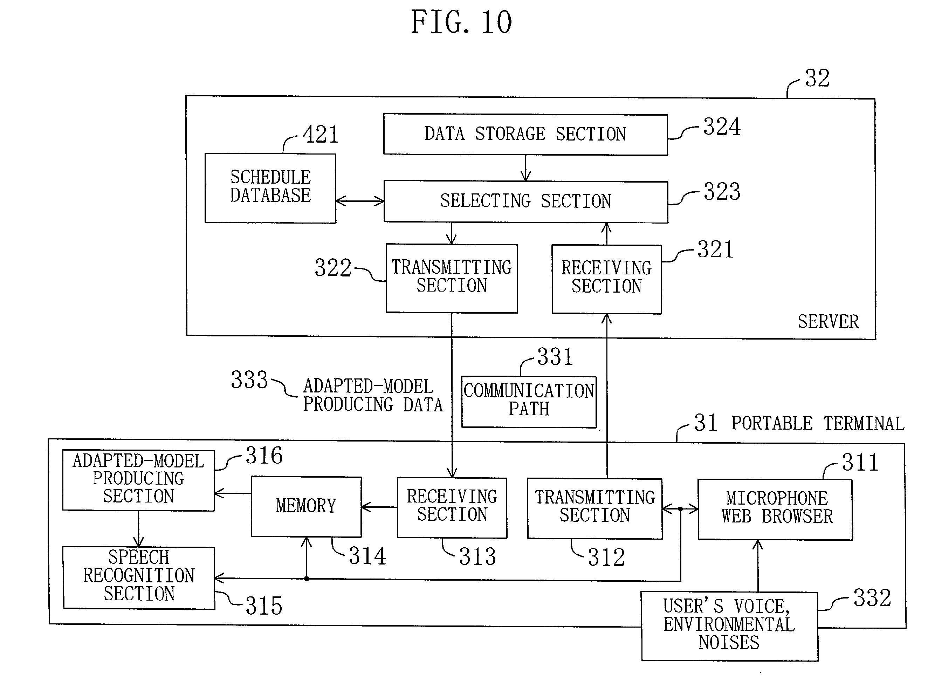

FIG. **10** shows the overall structure of a speech recognition system according to the fourth embodiment. This speech recognition system includes a portable terminal **31** and a server **32**. The portable terminal **31** and the server **32** transmit and receive data to and from each other via a communication path **331**.

The portable terminal **31** includes a data input section **311,** a transmitting section **312**, a receiving section **313,** a memory **314,** an adapted-model producing section **316** and a speech recognition section **315.** The data input section **311** inputs information such as a voice of a user of the portable terminal **31** and noises around the portable terminal **31**. The data input section **311** includes a microphone and a Web browser. The microphone inputs the user's voice and environmental noises. The Web browser inputs information about the user's voice and the environmental noises. The transmitting section **312** transmits the data which is input by the data input section **311** to the server **32**. The receiving section **313** receives adapted-model producing data transmitted from the server **32**. The adapted-model producing data received by the receiving section **313** is stored in the memory **314**. The adapted-model producing section **316** produces an adapted model using the adapted-model producing data stored in the memory **314**. The speech recognition section **315** conducts speech recognition using an adapted model produced by the adapted-model producing section **316**. Data of characteristic sounds in various situations (environments) are stored in advance in the memory **314**. For example, characteristic sounds at locations such as a supermarket and an exhibition site and characteristic sounds of an automobile, a subway and the like are stored in advance in the memory **314**. Such data are downloaded in advance from the server **32** to the memory **314** of the portable terminal **31** before a speech recognition process is conducted by the portable terminal **31**.

The server **32** includes a receiving section **321**, a transmitting section **322**, a selecting section **323**, a data storage section **324** and a schedule database **421**. A plurality of acoustic models and selection models (GMMs) for selecting the plurality of acoustic models are stored in the data storage section **324**. The receiving section **321** receives data transmitted from the portable terminal **31**. The selecting section **323** selects from the data storage section **324** adapted-model producing data which is required to conduct adaptation to an environment where the potable terminal **31** is used and the like. The transmitting section **322** transmits the adapted-model producing data selected by the selecting section **323** to the portable terminal **31**.

[Operation of the speech recognition system]

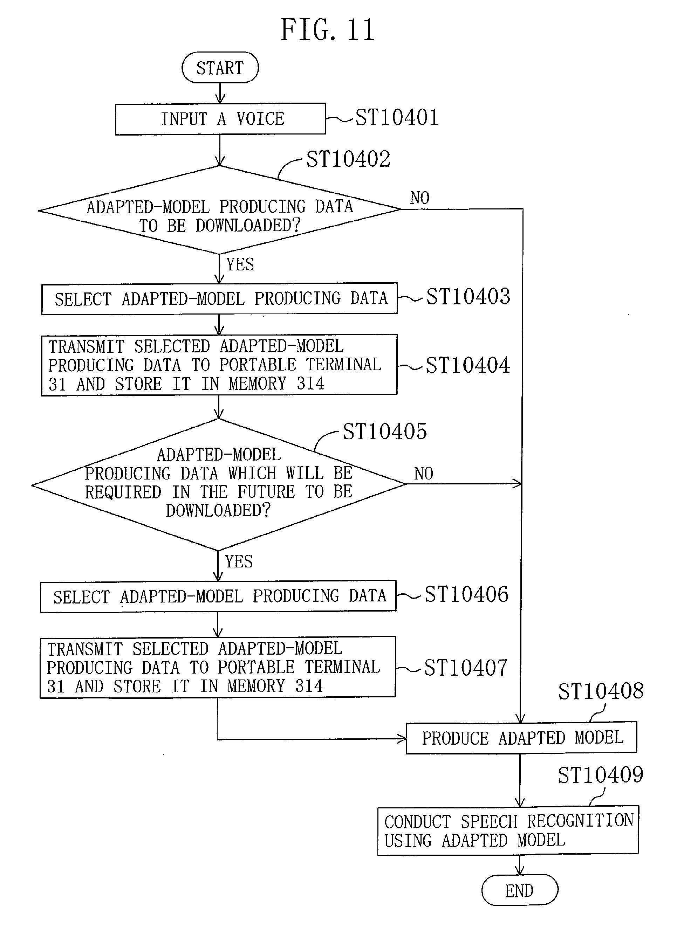

Hereinafter, operation of the speech recognition system having the above structure will be described with reference to FIG. **11**. It is herein assumed that the user uses the portable terminal **31** at a supermarket.

[Step **ST10401**]

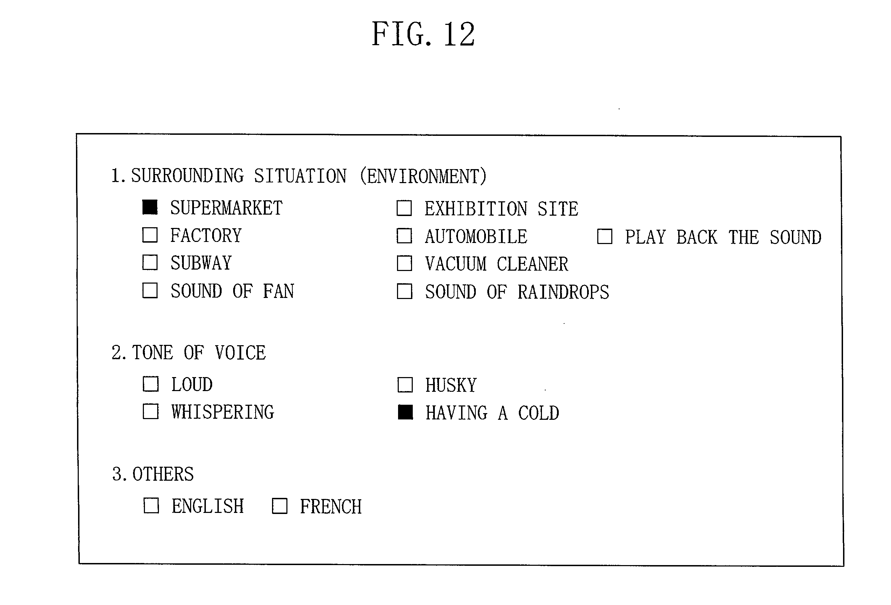

The user of the portable terminal **31** inputs voice such as "what do I make for dinner?" using the microphone of the data input section **311**. As shown in FIG. **12**, the Web browser of the data input section **311** displays a prompt on a touch panel of the portable terminal **31** to input information such as a surrounding situation (environment) and tone of voice. The user of the portable terminal **31** inputs information such as a surrounding situation (environment) and tone of voice by checking the box of "supermarket" and the box of "having a cold" on the touch panel with a soft pen. If the user of the portable terminal **31** checks the box of "play back the sound", data of characteristic sounds in the checked situation (environment) are read from the memory **314** and played back. In this case, characteristic sounds at a supermarket are played back.

[Step **ST10402**]

The portable terminal **31** prompts the user to determine whether adapted-model producing data is to be obtained or not. If the user determines that adapted-model producing data is to be obtained (yes in step **ST10402**), the information **332** which was input in step **ST10401** is transmitted from the transmitting section **312** of the portable terminal **31** to the server **32,** and the routine proceeds to step **ST10403**. On the other hand, if the user determines that adapted-model producing data is not to be obtained (no in step **ST10402**), no data is transmitted to the server **32,** and the routine proceeds to step **ST10408**.

[Step **ST10403**]

A plurality of acoustic models and a plurality of GMMs are stored in advance in the data storage section **324** of the server **32** in a one-to-one correspondence, as shown in FIG. **3**.

The receiving section **321** of the server **32** receives the information **332** of the portable terminal **31** from the portable terminal **31**. Based on the received information **332** of the portable terminal **31**, the selecting section **323** selects at least two acoustic models and corresponding GMMs from the acoustic models and the GMMs stored in the data storage section **324**. The acoustic models and corresponding GMMs thus selected by the selecting section **323** are "adapted-model producing data". The selecting section **323** herein selects adapted-model producing data by basically the same method as that of the adapted-model selecting section **123** of the first embodiment. More specifically, the selecting section **323** selects adapted-model producing data based on the voice of the user. In this case, however, acoustic models to be selected are limited by the information which is input via the touch panel out of the information **332** of the portable terminal **31**. Note that limitation herein means filtering. For example, if the information "having a cold" and "supermarket" is input via the touch panel, acoustic models and corresponding GMMs are selected by using only GMMs corresponding to the acoustic models relating to "having a cold" and "supermarket".

[Step **ST10404**]

The transmitting section **322** transmits the adapted-model producing data **333** selected by the selecting section **323** to the portable terminal **31**.

The adapted-model producing data **333** received by the receiving section **313** of the portable terminal **31** is stored in the memory **314**. In this example, the newly downloaded adapted-model producing data is added to the adapted-model producing data which have already been stored in the memory **314**.

[Step **ST10405**]

The portable terminal **31** prompts the user to determine whether adapted-model producing data for producing an adapted model which will be used in the future is to be obtained or not. If the user determines that adapted-model producing data is to be obtained (yes in step **ST10405**), the transmitting section **312** of the portable terminal **31** transmits a request signal to the server **32,** and the routine proceeds to step **ST10406**. On the other hand, if the user determines that adapted-model producing data is not to be obtained (no in step **ST10405**), the transmitting section **312** of the portable terminal **31** does not transmit a request signal to the server **32** and the routine proceeds to step **ST10408**.

[Step **ST10406**]

In response to the request signal from the portable terminal **31**, the selecting section **323** predicts a situation which may be encountered by the user, and selects adapted-model producing data for producing an acoustic model adapted to the predicted situation (at least two acoustic models and GMMs corresponding to these models) from the data storage section **324**. An acoustic model to be produced is selected in the same manner as that described in step **ST10112** in FIG. **5.** Adapted-model producing data is selected in the same manner as that described above in step **ST10403**.

[Step **ST10407**]

The adapted-model producing data thus selected is transmitted from the transmitting section **322** of the server **32** to the portable terminal **31**. The receiving section **313** of the portable terminal **31** receives the adapted-model producing data from the server **32**. The adapted-model producing data received by the receiving section **313** is stored in the memory **314**. In this example, the newly downloaded adapted-model producing data is added to the adapted-model producing data which have already been stored in the memory **214**.

[Step **ST10408**]

The adapted-model producing section **316** produces an adapted model using the adapted-model producing data which have been stored in the memory **314** so far. In this example, the adapted-model producing section **316** produces an adapted model based on the method using the sufficient statistics and the distance between speakers' characteristics (YOSHIZAWA Shinichi, BABA Akira, MATSUNAMI Kanako, MERA Yuichiro, YAMADA Miichi and SHIKANO Kiyohiro, "Unsupervised Training Based on the Sufficient HMM Statistics from Selected Speakers", Technical Report of IEICE, SP2000-89, pp. 83-88, 2000). Like the selecting section **323** of the server **32,** the adapted-model producing section **316** selects a plurality of acoustic models from the memory **314** based on the voice which was input via the microphone of the data input section **311**. The selected acoustic models are a plurality of models which are the best adapted to the user and the ambient noises in the current environment. An adapted model is produced by statistical calculation using the mean, variance, transition probability, and E-M count of the plurality of selected acoustic models (HMMs). The mean, variance and transition probability of HMMs of an adapted model, are the mean and variance of each mixed distribution of each HMM state in the selected acoustic models, and the transition probability in the selected acoustic models. A specific calculation method is given by equations (1) to (3) below. It is herein assumed that the mean and variance of normal distribution in each HMM state of an adapted model are $\mu_i^{adp}$ (i = 1, 2, ..., $N_{mix}$) and $v_i^{adp}$ (i = 1, 2, ..., $N_{mix}$), respectively, where $N_{mix}$ is the number of mixed distributions. The state transition probability is $a^{adp}$[i][j] (i, j = 1, 2, ..., $N_{state}$), where $N_{state}$ is the number of states. $a^{adp}$[i][j] is transition probability from state i to state j.

$$\mu_i^{adp} = \frac{\sum_{j=1}^{N_{sel}} C_{mix}^j \mu_i^j}{\sum_{j=1}^{N_{sel}} C_{mix}^j} \left(i = 1,2,...,N_{mix}\right) \tag{1}$$

$$v_i^{adp} = \frac{\sum_{j=1}^{N_{sel}} C_{mix}^j \left(v_i^j + \left(\mu_i^j\right)^2\right)}{\sum_{j=1}^{N_{sel}} C_{mix}^j} - \left(\mu_i^{adp}\right)^2 \left(i = 1,2,...,N_{mix}\right) \tag{2}$$

$$a^{adp}[i][j] = \frac{\sum_{k=1}^{N_{sel}} C_{state}^k[i][j]}{\sum_{j=1}^{N_{state}} \sum_{k=1}^{N_{sel}} C_{state}^k[i][j]} \left(i,j = 1,2,...,N_{state}\right) \tag{3}$$

In the above equations (1) to (3), $N_{sel}$ is the number of selected acoustic models, and $\mu_i^j$ (i = 1, 2, ..., $N_{mix}$, j = 1, 2, ..., $N_{sel}$) and $v_i^j$ (i = 1, 2, ..., $N_{mix}$, j = 1, 2, ..., $N_{sel}$) are the mean and variance of each acoustic model, respectively.

Moreover, $C_{mix}^j$ (j = 1, 2, ..., $N_{sel}$) and $C_{state}^k$[i][j] (k = 1, 2, ..., $N_{sel}$, i, j = 1, 2, ..., $N_{state}$) are an E-M count (frequency) in the normal distribution and an E-M count relating to state transition, respectively.

[Step **ST10409**]

The speech recognition section **315** conducts speech recognition using the adapted model produced by the adapted-model producing section **316**.

As has been described above, according to the fourth embodiment, it is not necessary to store adapted-model producing data corresponding to all situations which may be encountered (but actually, are less likely to be encountered) in the memory **314** of the portable terminal **31**. Adapted-model producing data for adaptation to the encountered situation need only be obtained from the server **32** and stored in the memory **314**. This enables reduction in capacity of the memory **314** of the portable terminal **31**.

Moreover, the user of the portable terminal **31** can conduct speech recognition using an adapted model adapted to noises around the portable terminal **31**, characteristics of the user, tone of the user's voice. This enables implementation of a high recognition rate.

Moreover, adapted-model producing data corresponding to the encountered situation is stored in the memory **314** of the portable terminal **31**. Therefore, if the user encounters the same situation, an adapted model can be produced without communicating with the server **32**.

[Modification]

The adapted-model producing section **316** may be provided within the PDA **11** of FIGs. **1** and **4** and the mobile phone **21** of **FIG. 7,** and an adapted model may be produced using at least two of acoustic models stored in the memory **114, 214, 314**.

Adapted-model producing data of a plurality of users may be stored in the memory **314** in order to produce an adapted model. In this case, an adapted model is produced by selecting the adapted-model producing data of a specific user by inputting the user's voice/designating the user name.

The acoustic models are not limited to HMMs.

A feature vector such as cepstrum coefficients resulting from transform of voice may be transmitted to the server **32** as the information **332** of the portable terminal **31**.

Another adaptation method using acoustic models may be used for production of an adapted model for speech recognition.

A microphone different from that of the data input section **311** may be used to input voice used for production of an adapted model for speech recognition.

A stationary terminal such as a television, a personal computer and a car navigation system may be used instead of the portable terminal **31**.

The communication path **331** may be a cable (such as a telephone line, an Internet line and a cable television line), a communications network, and a broadcasting network (such as BS/CS digital broadcasting and terrestrial digital broadcasting).

The server and the terminal may be disposed close to each other in a three-dimensional space. For example, the server **32** may be a television or a set-top box, and the portable terminal **31** may be a remote controller of the television.

(Fifth Embodiment)

[Structure of the speech recognition system]

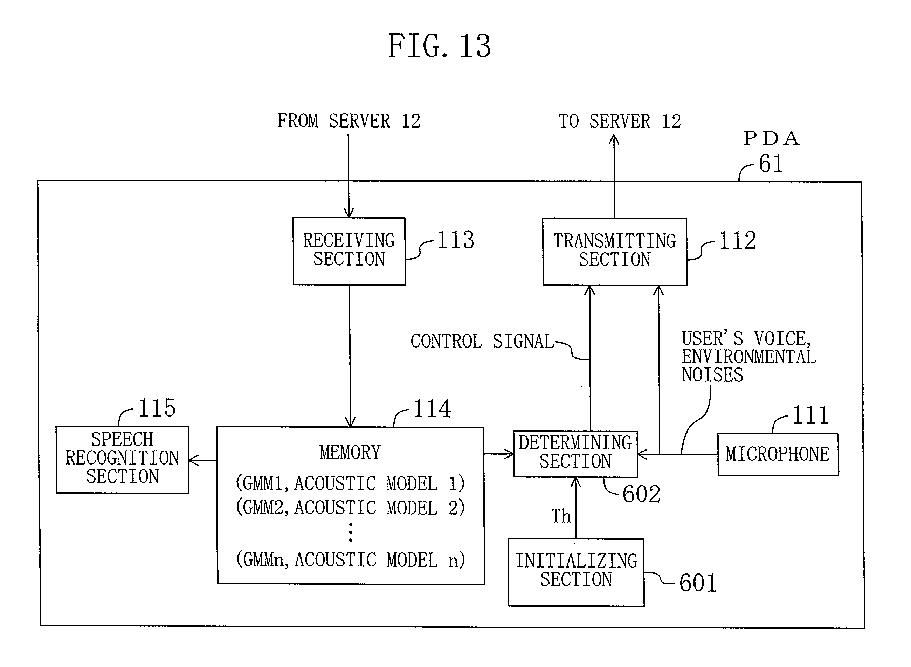

The speech recognition system of the fifth embodiment includes a PDA **61** of FIG. **13** instead of the PDA **11** of FIG. **1**. The structure of the speech recognition system of the fifth embodiment is otherwise the same as the speech recognition system of FIG. **1**.

The PDA **61** of FIG. **13** includes an initializing section **601** and a determining section **602** in addition to the components of the PDA **11** of FIG. **1.** Moreover, n sets of acoustic models and corresponding GMMs which have already been received by the receiving section **113** are stored in the memory **114** (n is a positive integer). The initializing section **601** applies a threshold value **Th** to the determining section **602**. The initializing section **601** may set the threshold value **Th** automatically or according to an instruction of the user. The determining section **602** transforms the data obtained by the microphone **111**, that is, the voice of the user having environmental noises added thereto, into a predetermined feature vector. The determining section **602** then compares the likelihood of the predetermined feature vector and the GMM of each acoustic model stored in the memory **114** with the threshold value **Th** received from the initializing section **601**. If the likelihood of every acoustic model stored in the memory **114** is smaller than the threshold value **Th,** the determining section **602** applies a control signal to the transmitting section **112**. In response to the control signal from the determining section **602,** the transmitting section **112** transmits the user's voice and the environmental noises obtained by the microphone **111** to the server **12**. On the other hand, if the likelihood of any acoustic model stored in the memory **114** is equal to or higher than the threshold value **Th**, the determining section **602** does not apply a control signal to the transmitting section **112**, and the transmitting section **602** does not transmit any data to the server **12**.

[Operation of the speech recognition system]

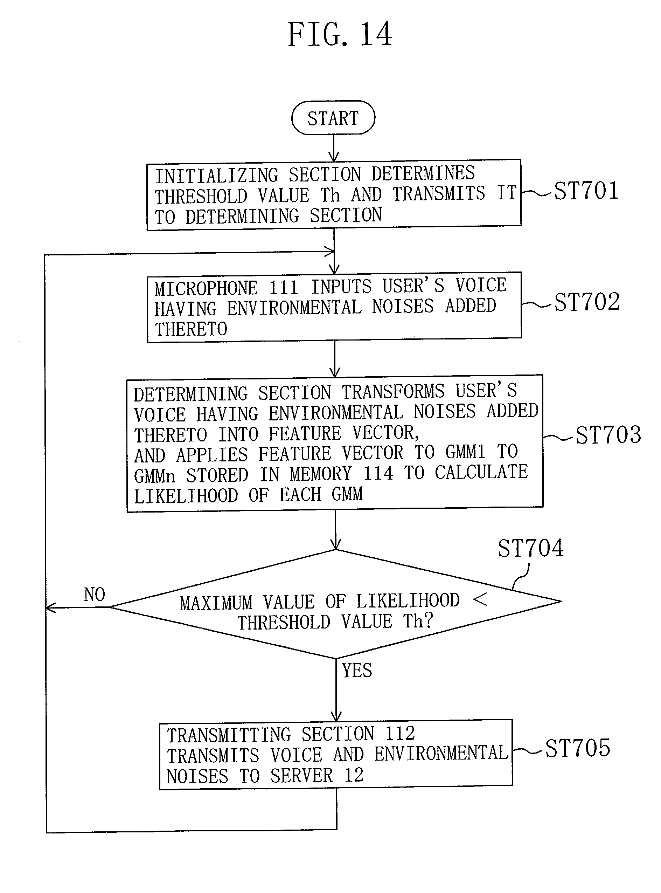

Hereinafter, operation of the speech recognition system having the above structure will be described with reference to FIG. **14**.

As described above, n sets of acoustic models and corresponding GMMs which have already been received by the receiving section **113** are stored in the memory **114** of the PDA **61** (where n is a positive integer).

The initializing section **601** of the PDA **61** determines the threshold value **Th** and transmits the threshold value **Th** to the determining section **602** (step **ST701**). The threshold value **Th** is determined according to an application using speech recognition. For example, if an application relating to security (e.g., an application for processing confidential information by speech recognition, an application for driving an automobile by speech recognition, and the like) is used, the initializing section **601** sets the threshold value **Th** to a large value. If other applications are used, the initializing section **601** sets the threshold value **Th** to a small value. When an application to be used is selected, the initializing section **601** applies a threshold value **Th** corresponding to the selected application to the determining section **602**.

The user's voice having environmental noises added thereto is then input via the microphone **111** of the PDA **61** (step **ST702**).

Thereafter, the user's voice having the environmental noises added thereto thus obtained by the microphone **111** is transformed into a predetermined feature vector by the determining section **602** of the PDA **61**. The feature vector thus obtained is applied to the GMM of each acoustic model (i.e., GMM1 to GMMn) stored in the memory **114**, whereby the likelihood of each GMM is calculated (step **ST703**).

The determining section **602** then determines whether the maximum value of the likelihood calculated in step

ST703 is smaller than the threshold value **Th** or not (step **ST704**).

If the likelihood of every GMM (GMM1 to GMMn) stored in the memory **114** is smaller than the threshold value **Th** (yes in step **ST704**), the routine proceeds to step **ST705**. The determining section **602** then applies a control signal to the transmitting section **112**. In response to the control signal from the determining section **602**, the transmitting section **112** transmits the user's voice and the environmental noises which were obtained via the microphone **111** to the server **12** (step **ST705**). The server **12** transmits an acoustic model which is the best adapted to the user's voice and the environmental noises to the PDA **61** in the same manner as that in the first embodiment. This acoustic model is received by the receiving section **113** of the PDA **61** and stored in the memory **114**. The speech recognition section **115** then conducts speech recognition using the acoustic model thus stored in the memory **114**.

On the other hand, if any likelihood calculated in step **ST703** is equal to or higher than the threshold value **Th** (no in step **ST704**), the determining section **602** does not apply a control signal to the transmitting section **112**. Accordingly, the transmitting section **112** does not transmit any data to the server **12**. The speech recognition section **115** then conducts speech recognition using an acoustic model corresponding to the GMM having the highest likelihood calculated in step **ST703**.

As has been described above, according to the speech recognition system of the fifth embodiment, the user's voice and the environmental noises are transmitted from the PDA **61** to the server **12** only when the likelihood of the user's voice having the environmental noises added thereto and an acoustic model which is stored in advance in the memory **114** of the PDA **61** is smaller than a predetermined threshold value. This enables reduction in transmission and reception of data between the PDA **61** and the server **12**.

[Modification]

The mobile phone **21** of FIG. **7** and the portable terminal **31** of FIG. **10** may have the initializing section **601** and the determining section **602**.

The server and the terminal may be disposed close to each other in a three-dimensional space. For example, the server **12** may be a television or a set-top box, and the PDA **61** (terminal) may be a remote controller of the television.

(Sixth Embodiment)

[Structure of the speech recognition system]

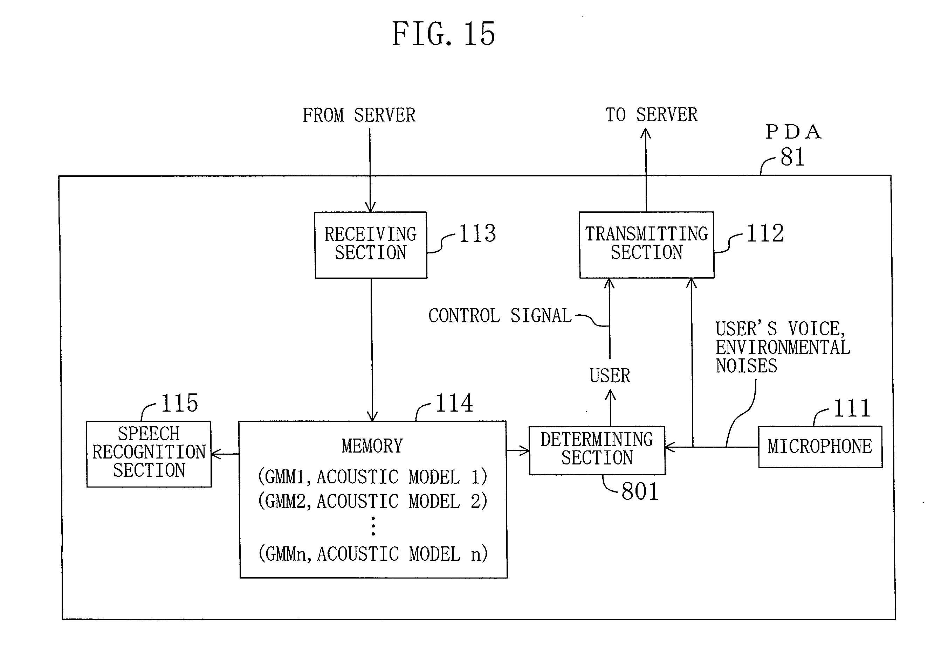

The speech recognition system according to the sixth embodiment includes a PDA **81** of FIG. **15** instead of the PDA **11** of FIG. **1**. The structure of the speech recognition system of the sixth embodiment is otherwise the same as the speech recognition system of FIG. **1**.

The PDA **81** of FIG. **15** includes a determining section **801** in addition to the components of the PDA **11** of FIG. **1**. Moreover, n sets of acoustic models and corresponding GMMs which have already been received by the receiving section **113** are stored in the memory **114** (n is a positive integer). The determining section **801** transforms the data obtained by the microphone **111**, that is, the voice of the user having environmental noises added thereto, into a predetermined feature vector. The determining section **801** then compares the likelihood of the predetermined feature vector and the GMM of each acoustic model stored in the memory **114** with a predetermined threshold value. If the likelihood of every acoustic model stored in the memory **114** is smaller than the threshold value, the determining section **801** prompts the user to determine whether an acoustic model is to be downloaded or not. If the user determines that an acoustic model is to be downloaded, the transmitting section **112** transmits the user's voice and the environmental noises obtained by the microphone **111** to the server **12**. On the other hand, if the user determines that an acoustic model is not to be downloaded, the transmitting section **112** does not transmit any data to the server **12**. Moreover, if the likelihood of any acoustic model stored in the memory **114** is equal to or higher than the threshold value, the transmitting section **112** does not transmit any data to the server **12**.

[Operation of the speech recognition system]

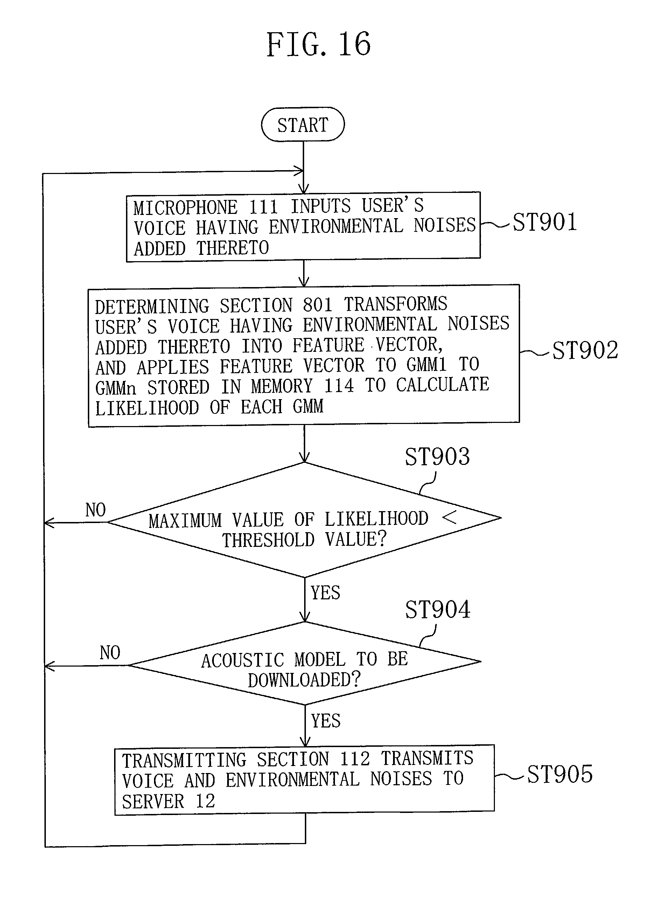

Hereinafter, operation of the speech recognition system having the above structure will be described with reference to FIG. **16**.

As described above, n sets of acoustic models and corresponding GMMs which have already been received by the receiving section **113** are stored in the memory **114** of the PDA **81** (where n is a positive integer).

The user's voice having environmental noises added thereto is then input via the microphone **111** of the PDA **81** (step **ST901**).

Thereafter, the user's voice having the environmental noises added thereto thus obtained by the microphone **111** is transformed into a predetermined feature vector by the determining section **801** of the PDA **81**. The feature vector thus obtained is applied to the GMM of each acoustic model (i.e., GMM1 to GMMn) stored in the memory **114**, whereby the likelihood of each GMM is calculated (step **ST902**).

The determining section **801** then determines whether the maximum value of the likelihood calculated in step **ST902** is smaller than a predetermined threshold value or not (step **ST903**).

If the likelihood of every GMM (GMM1 to GMMn) stored in the memory **114** is smaller than the threshold value (yes in step **ST903**), the routine proceeds to step **ST904.** The determining section **801** then prompts the user to determine whether an acoustic model is to be downloaded or not (step **ST904**). If the user determines that an acoustic model is to be downloaded (yes in step **ST904**), the transmitting section **112** transmits the user's voice and the environmental noises which were obtained by the microphone **111** to the server **12** (step **ST905**). The server **12** transmits an acoustic model which is the best adapted to the user's voice and the environmental noises to the PDA **81** in the same manner as that of the first embodiment. This acoustic model is received by the receiving section **113** of the **PDA 81** and stored in the memory **114**. The speech recognition section **115** conducts speech recognition using the acoustic model thus stored in the memory **114.**

On the other hand, if any likelihood calculated in step **ST902** is equal to or higher than the threshold value (no in step **ST903**) and if the user determines that an acoustic model is not to be downloaded (no in step **ST904**), the transmitting section **112** does not transmit any data to the server **12**. The speech recognition section **115** then conducts speech recognition using an acoustic model of the GMM having the highest likelihood calculated in step **ST902**.

As has been described above, according to the speech recognition system of the sixth embodiment, the user's voice and the environmental noises are transmitted from the PDA **81** to the server **12** only when the likelihood of the user's voice having the environmental noises added thereto and an acoustic model which is stored in advance in the memory **114** of the PDA **81** is smaller than a predetermined threshold value and the user determines that an acoustic model is to be downloaded. This enables reduction in transmission and reception of data between the PDA **81** and the server **12**.

[Modification]

The mobile phone **21** of FIG. **7** and the portable terminal **31** of FIG. **10** may have the determining section **801**.
The server and the terminal may be disposed close to each other in a three-dimensional space. For example, the server **12** may be a television or a set-top box, and the PDA **81** (terminal) may be a remote controller of the television.

(Seventh Embodiment)

[Structure of the speech recognition system]

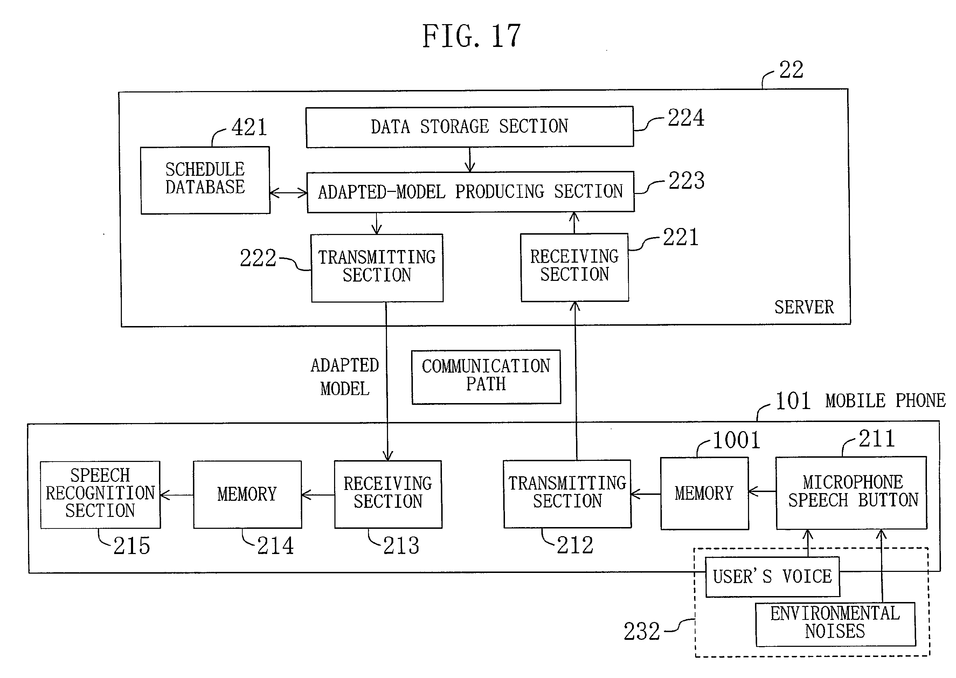

FIG. **17** shows the structure of a speech recognition system according to the seventh embodiment. This speech recognition system includes a mobile phone **101** instead of the mobile phone **21** of FIG. **7**. The structure of the speech recognition system of the seventh embodiment is otherwise the same as the speech recognition system of FIG. **7**.

The mobile phone **101** of FIG. **17** includes a memory **1001** in addition to the components of the mobile phone **21** of FIG. **7.** The voice of a user and environmental noises are input by the data input section **211** and stored in the memory **1001**. The transmitting section **212** transmits the user's voice and the environmental noises stored in the memory **1001** to the server **22**.

[Operation of speech recognition system]

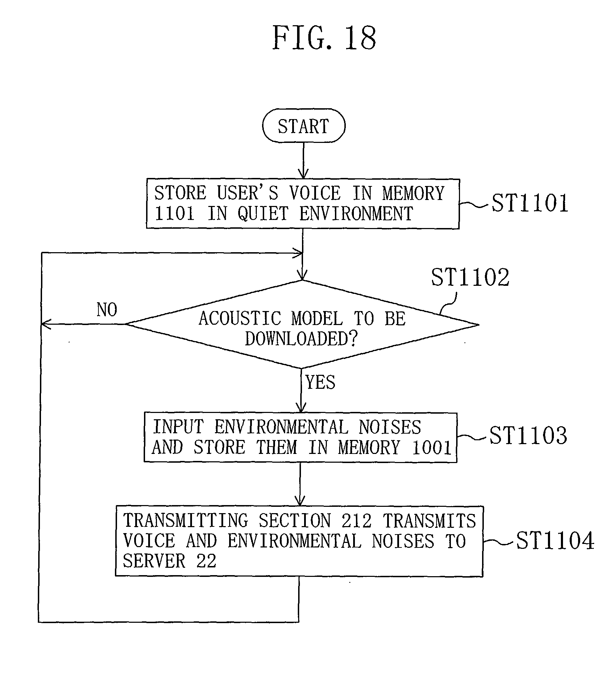

Hereinafter, operation of the speech recognition system having the above structure will be described with reference to FIG. **18**.
In the case where an adapted model is produced using a voice of a user in a quiet environment, an adapted model can be produced with higher accuracy as compared to the case where an adapted model is produced using a noise-added voice. In the case where the user carries the mobile phone **101**, there are noises (such as noises of automobiles, speaking voices of the people around the user, the sound of fans in the office) in most of the day. However, ambient noises may hardly exist in a certain period of time (e.g., while the user has a break at a park or the like). At this timing, the user of the mobile phone **101** speaks while pressing the speech trigger button. The voice of the user in a quiet environment is thus stored in the memory **1001** (step **ST1101**).
If the user attempts to use a speech recognition function, the mobile phone **101** prompts the user to determine whether an acoustic model is to be downloaded or not (step **ST1102**). If the user determined that an acoustic model is to be downloaded (yes in step **ST1102**), the user inputs environmental noises using the microphone without pressing the speech trigger button. The environmental noises thus input by the microphone are stored in the memory **1001** (step **ST1103**).

The transmitting section **212** then transmits the user's voice and the environmental noises which are stored in the memory **1001** to the server **22** (step **ST1104**). The server **22** transmits an acoustic model which is the best adapted to the user's voice and the environmental noises to the mobile phone **101** in the same manner as that of the third embodiment. This acoustic model is received by the receiving section **213** of the mobile phone **101** and stored in the memory **214**. The speech recognition section **215** conducts speech recognition using this acoustic model stored in the memory **214**.

According to the speech recognition system of the seventh embodiment, the mobile phone **101** has the memory **1001**. Therefore, speaker adaptation can be conducted using the voice of the user in a less-noisy environment. This enables implementation of accurate speaker adaptation.

Moreover, once the user's voice is stored, the user need no longer speak every time an adapted model is produced. This reduces the burden on the user.

[Modification]

Voices of a plurality of people in a quiet environment may be stored in the memory **1001**. In this case, the voices of the plurality of people in a quiet environment and their names are stored in the memory **1001** in a one-to-one correspondence. If an adapted model is to be obtained, an adapted model is produced by determining the voice of the user by designating the user name. This enables a highly accurate adapted model to be used even in an equipment which is used by a plurality of people such as a remote controller of a television.

In the above example, the user's voice and the environmental noises which are stored in the memory **1001** are transmitted to the server **22** in step **ST1104**. However, the user's voice in a quiet environment with environmental noises added thereto, which is stored in the memory **1001**, may be transmitted to the server **22**.

The server and the terminal may be disposed close to each other in a three-dimensional space. For example, the server **22** may be a television or a set-top box, and the mobile phone **101** (terminal) may be a remote controller of the television.

**Claims**

**1.** A terminal device, comprising:

a transmitting means for transmitting a voice produced by a user and environmental noises to a server device;
a receiving means for receiving from the server device an acoustic model adapted to the voice of the user and the environmental noises;
a first storage means for storing the acoustic model received by the receiving means; and
a speech recognition means for conducting speech recognition using the acoustic model stored in the first storage means.

**2.** The terminal device according to claim 1, wherein the receiving means further receives an acoustic model which will be used by the user in future from the server device.

**3.** The terminal device according to claim 1, further comprising:

a determining means for comparing similarity between the voice of the user having the environmental noises added thereto and an acoustic model which has already been stored in the first storage means with a predetermined threshold value, wherein
if the similarity is smaller than the threshold value, the transmitting means transmits the voice of the user and the environmental noises to the server device.

**4.** The terminal device according to claim 3, wherein
if the similarity is smaller than the threshold value, the determining means prompts the user to determine whether an acoustic model is to be obtained or not, and
if the user determines that an acoustic model is to be obtained, the transmitting means transmits the voice of the user and the environmental noises to the server device.

**5.** The terminal device according to claim 1, further comprising:

a second storage means for storing a voice produced by a user, wherein
if environmental noises are obtained, the transmitting means transmits the environmental noises and the voice of the user stored in the second storage means to the server device.

**6.** The terminal device according to claim 1, wherein the terminal device prompts the user to select a desired environment from various environments, and plays back a characteristic sound of the selected environment.

**7.** A terminal device, comprising:

a transmitting means for transmitting a voice produced by a user and environmental noises to a server device;
a receiving means for receiving from the server device acoustic-model producing data for producing an acoustic model adapted to the voice of the user and the environmental noises;
a first storage means for storing the acoustic-model producing data received by the receiving means;
a producing means for producing the acoustic model adapted to the voice of the user and the environmental noises by using the acoustic-model producing data stored in the first storage means; and
a speech recognition means for conducting speech recognition using the acoustic model produced by the producing means.

**8.** The terminal device according to claim 7, wherein the receiving means further receives acoustic-model producing data which will be used by the user in future from the server device.

**9.** The terminal device according to claim 7, wherein the terminal device prompts the user to select a desired environment from various environments, and plays back a characteristic sound of the selected environment.

**10.** A server device, comprising:

a storage means for storing a plurality of acoustic models each adapted to a corresponding speaker and a corresponding environment;
a receiving means for receiving from a terminal device a voice produced by a user and environmental noises;
a selecting means for selecting from the storage means an acoustic model which is adapted to the voice of the user and the environmental noises received by the receiving means; and
a transmitting means for transmitting the acoustic model selected by the selecting means to the terminal device.

**11.** The server device according to claim 10, wherein the selecting means selects an acoustic model which will be used by a user of the terminal device in future from the storage means.

**12.** The server device according to claim 10, wherein each of the plurality of acoustic models stored in the storage means is adapted also to a tone of voice of a corresponding speaker.

**13.** The server device according to claim 10, wherein each of the plurality of acoustic models stored in the storage means is adapted also to characteristics of an inputting means for obtaining a voice produced by a speaker in order to produce the acoustic model.

**14.** A server device, comprising:

a storage means for storing a plurality of acoustic models each adapted to a corresponding speaker and a corresponding environment;
a receiving means for receiving from a terminal device a voice produced by a user and environmental noises;
a producing means for producing an acoustic model adapted to the voice of the user and the environmental noises, based on the voice of the user and the environmental noises received by the receiving means and the plurality of acoustic models stored in the storage means; and
a transmitting means for transmitting the acoustic model produced by the producing means to the terminal device.

**15.** The server device according to claim 14, wherein the producing means produces an acoustic model which will be used by a user of the terminal device in future.

**16.** The server device according to claim 14, wherein each of the plurality of acoustic models stored in the storage means is adapted also to a tone of voice of a corresponding speaker.

**17.** The server device according to claim 14, wherein each of the plurality of acoustic models stored in the storage means is adapted also to characteristics of an inputting means for obtaining a voice produced by a speaker in order to produce the acoustic model.

**18.** A server device, comprising:

a storage means for storing a plurality of acoustic models each adapted to a corresponding speaker and a corresponding environment;
a receiving means for receiving from a terminal device a voice produced by a user and environmental noises;
a selecting means for selecting from the storage means acoustic-model producing data for producing an acoustic model which is adapted to the voice of the user and the environmental noises received by the receiving means; and
a transmitting means for transmitting the acoustic-model producing data selected by the selecting means to the terminal device.

**19.** The server device according to claim 18, wherein the selecting means selects acoustic-model producing data which will be used by a user of the terminal device in future from the storage means.

**20.** The server device according to claim 18, wherein each of the plurality of acoustic models stored in the storage means is adapted also to a tone of voice of a corresponding speaker.

**21.** The server device according to claim 18, wherein each of the plurality of acoustic models stored in the storage means is adapted also to characteristics of an inputting means for obtaining a voice produced by a speaker in order to produce the acoustic model.

**22.** A speech recognition method, comprising the steps of:

preparing a plurality of acoustic models each adapted to a corresponding speaker, a corresponding environment, and a corresponding tone of voice;
obtaining an acoustic model adapted to a voice produced by a user and environmental noises, based on the voice of the user, the environmental noises and the plurality of acoustic models; and
conducting speech recognition using the obtained acoustic model.

**23.** The speech recognition method according to claim 22, wherein each of the plurality of acoustic models is adapted also to characteristics of an inputting means for obtaining a voice produced by a speaker in order to produce the acoustic model.

# FIG. 1

EP 1 293 964 A2

EP 1 293 964 A2

# FIG. 2

START

INPUT A VOICE — ST10101

ST10102

ADAPTED MODEL TO BE
DOWNLOADED?

NO

YES

ST10103

SELECT ADAPTED MODEL FROM DATA
STORAGE SECTION 124 OF SERVER

ST10104

TRANSMIT SELECTED ADAPTED MODEL
AND GMM TO PDA 11 AND STORE THEM
IN MEMORY 114

ST10105

CONDUCT SPEECH RECOGNITION
USING ADAPTED MODEL STORED
IN MEMORY 114

END

# FIG. 3

124 DATA STORAGE SECTION

**IN A CAR, SPEAKER A, HOARSE VOICE, MICROPHONE A**

GMM

/a/ → HMM

/i/ → HMM

ACOUSTIC MODEL

**IN A CAR, SPEAKER B, NASAL VOICE, MICROPHONE B**

GMM

/a/ → HMM

/i/ → HMM

ACOUSTIC MODEL

**AT AN EXHIBITION SITE, SPEAKER Z, NASAL VOICE, MICROPHONE C**

GMM   ACOUSTIC MODEL

**AT HOME, SPEAKER K, ORDINARY VOICE, MICROPHONE A**

GMM   ACOUSTIC MODEL

**AT HOME, SPEAKER Z, NASAL VOICE, MICROPHONE A**

GMM   ACOUSTIC MODEL

**AT AN EXHIBITION SITE, SPEAKER Z, NASAL VOICE, MICROPHONE D**

GMM   ACOUSTIC MODEL

**IN A CAR, SPEAKER Z, NASAL VOICE, MICROPHONE C**

GMM   ACOUSTIC MODEL

**AT HOME, SPEAKER F, ORDINARY VOICE, MICROPHONE B**

GMM   ACOUSTIC MODEL

EP 1 293 964 A2

EP 1 293 964 A2

# FIG. 4

**SERVER (42)**
- DATA STORAGE SECTION — 124
- SCHEDULE DATABASE — 421
- ADAPTED-MODEL SELECTING SECTION — 123
- TRANSMITTING SECTION — 122
- RECEIVING SECTION — 121

- 133 ADAPTED MODEL
- COMMUNICATION PATH — 131

**PDA (11)**
- SPEECH RECOGNITION SECTION — 115
- MEMORY — 114
- RECEIVING SECTION — 113
- TRANSMITTING SECTION — 112
- MICROPHONE — 111
- USER'S VOICE, ENVIRONMENTAL NOISES — 132

## FIG. 5

```
                    ( START )
                        │
                        ▼
        ┌───────────────────────────────┐
        │       INPUT A VOICE           │──── ST10101
        └───────────────────────────────┘
                        │
                        ▼        ST10102
                 ╱─────────────────╲           NO
                ╱  ADAPTED MODEL TO  ╲───────────────────┐
                ╲  BE DOWNLOADED?    ╱                    │
                 ╲─────────────────╱                      │
                        │ YES                             │
                        ▼                                 │
        ┌───────────────────────────────┐                │
        │ SELECT ADAPTED MODEL FROM DATA │──── ST10103    │
        │ STORAGE SECTION 124 OF SERVER  │                │
        └───────────────────────────────┘                │
                        │                                 │
                        ▼                                 │
        ┌───────────────────────────────┐                │
        │ TRANSMIT SELECTED ADAPTED MODEL│                │
        │ AND GMM TO PDA 11 AND STORE THEM│─── ST10104    │
        │ IN MEMORY 114                  │                │
        └───────────────────────────────┘                │
                        │                                 │
                        ▼           ST10111               │
                 ╱─────────────────╲                      │
                ╱ ADAPTED MODEL WHICH╲       NO           │
                ╱ WILL BE REQUIRED IN ╲────────────────▶ │
                ╲ THE FUTURE TO BE    ╱                   │
                 ╲ DOWNLOADED?       ╱                    │
                 ╲─────────────────╱                      │
                        │ YES                             │
                        ▼                                 │
        ┌───────────────────────────────┐                │
        │ SELECT ADAPTED MODEL FROM DATA │──── ST10112    │
        │ STORAGE SECTION 124 OF SERVER  │                │
        └───────────────────────────────┘                │
                        │                                 │
                        ▼                                 │
        ┌───────────────────────────────┐                │
        │ TRANSMIT SELECTED ADAPTED MODEL│                │
        │ AND GMM TO PDA 11 AND STORE THEM│─── ST10113    │
        │ IN MEMORY 114                  │                │
        └───────────────────────────────┘                │
                        │              ST10114            │
                        │         ┌──────────────────────┴──┐
                        └────────▶│ CONDUCT SPEECH RECOGNITION│
                                  │ USING ADAPTED MODEL STORED│
                                  │ IN MEMORY 114             │
                                  └──────────────────────────┘
                                            │
                                            ▼
                                        ( END )
```

# FIG. 6

114 MEMORY

AT AN EXHIBITION SITE,
SPEAKER XX, ORDINARY VOICE

| GMM | ACOUSTIC MODEL |

ADAPTED MODELS WHICH WILL BE
USED IN THE FUTURE

AT AN EXHIBITION SITE,
SPEAKER XX, NASAL VOICE

| GMM | ACOUSTIC MODEL |

AT A CONSTRUCTION SITE,
SPEAKER XA, ORDINARY VOICE

| GMM | ACOUSTIC MODEL |

NOISES AT AN ASSEMBLY HALL,
SPEAKER XX, ORDINARY VOICE

| GMM | ACOUSTIC MODEL |

AT AN EXHIBITION SITE, SPEAKER XX,
ORDINARY VOICE IN ENGLISH

| GMM | ACOUSTIC MODEL |

AT A PUB, SPEAKER XX,
ORDINARY VOICE

| GMM | ACOUSTIC MODEL |

AT AN EXHIBITION SITE, SPEAKER XX,
ORDINARY VOICE IN FRENCH

| GMM | ACOUSTIC MODEL |

EP 1 293 964 A2

# FIG. 7

EP 1 293 964 A2

## FIG. 8

START

INPUT A VOICE ──ST10201

ST10202

ADAPTED MODEL TO BE DOWNLOADED? ──NO

YES

PRODUCE ADAPTED MODEL ──ST10203

TRANSMIT PRODUCED ADAPTED MODEL AND GMM TO MOBILE PHONE 21 AND STORE THEM IN MEMORY 214 ──ST10204

ST10211

ADAPTED MODEL WHICH WILL BE REQUIRED IN THE FUTURE TO BE DOWNLOADED? ──NO

YES

PRODUCE ADAPTED MODEL ──ST10212

TRANSMIT PRODUCED ADAPTED MODEL AND GMM TO MOBILE PHONE 21 AND STORE THEM IN MEMORY 214 ──ST10213

ST10214

CONDUCT SPEECH RECOGNITION USING ADAPTED MODEL STORED IN MEMORY 214

END

# FIG. 9

VOICE
(FROM RECEIVING
SECTION 221)

ST71
SPEAKER
ADAPTATION

MODEL ADAPTED
TO SPEAKER

ST73
SELECT
ACOUSTICALLY
CLOSE ACOUSTIC
MODEL OF SPEAKER

224
ACOUSTIC MODELS
SPEECH DATA

ST72
NOISE ADAPTATION (MLLR)

ADAPTED MODEL
(TO TRANSMITTING
SECTION 222)

NOISE-ADDED DATA

ST74
SELECT
ACOUSTICALLY
CLOSE VOICE OF
SPEAKER

NOISE
(FROM RECEIVING
SECTION 221)

223

EP 1 293 964 A2

# FIG. 10

EP 1 293 964 A2

# FIG. 11

START

INPUT A VOICE ~ST10401

ST10402

ADAPTED-MODEL PRODUCING DATA TO BE DOWNLOADED?

NO

YES

SELECT ADAPTED-MODEL PRODUCING DATA ~ST10403

TRANSMIT SELECTED ADAPTED-MODEL PRODUCING DATA TO PORTABLE TERMINAL 31 AND STORE IT IN MEMORY 314 ~ST10404

ST10405

ADAPTED-MODEL PRODUCING DATA WHICH WILL BE REQUIRED IN THE FUTURE TO BE DOWNLOADED?

NO

YES

SELECT ADAPTED-MODEL PRODUCING DATA ~ST10406

TRANSMIT SELECTED ADAPTED-MODEL PRODUCING DATA TO PORTABLE TERMINAL 31 AND STORE IT IN MEMORY 314 ~ST10407

ST10408

PRODUCE ADAPTED MODEL

ST10409

CONDUCT SPEECH RECOGNITION USING ADAPTED MODEL

END

# FIG. 12

1. SURROUNDING SITUATION (ENVIRONMENT)

- ■ SUPERMARKET
- □ FACTORY
- □ SUBWAY
- □ SOUND OF FAN

- □ EXHIBITION SITE
- □ AUTOMOBILE      □ PLAY BACK THE SOUND
- □ VACUUM CLEANER
- □ SOUND OF RAINDROPS

2. TONE OF VOICE

- □ LOUD
- □ WHISPERING

- □ HUSKY
- ■ HAVING A COLD

3. OTHERS

- □ ENGLISH    □ FRENCH

EP 1 293 964 A2

# FIG. 13

FROM SERVER 12      TO SERVER 12

P D A
—61

RECEIVING SECTION —113

TRANSMITTING SECTION —112

CONTROL SIGNAL—

USER'S VOICE, ENVIRONMENTAL NOISES

—115
SPEECH RECOGNITION SECTION

—114
MEMORY

(GMM1, ACOUSTIC MODEL 1)
(GMM2, ACOUSTIC MODEL 2)
⋮
(GMMn, ACOUSTIC MODEL n)

DETERMINING SECTION

—111
MICROPHONE

—602

Th

INITIALIZING SECTION —601

EP 1 293 964 A2

# FIG. 14

START

INITIALIZING SECTION DETERMINES
THRESHOLD VALUE Th AND TRANSMITS IT ⟩—ST701
TO DETERMINING SECTION

MICROPHONE 111 INPUTS USER'S VOICE
HAVING ENVIRONMENTAL NOISES ADDED ⟩—ST702
THERETO

DETERMINING SECTION TRANSFORMS USER'S
VOICE HAVING ENVIRONMENTAL NOISES ADDED
THERETO INTO FEATURE VECTOR,
AND APPLIES FEATURE VECTOR TO GMM1 TO ⟩—ST703
GMMn STORED IN MEMORY 114 TO CALCULATE
LIKELIHOOD OF EACH GMM

ST704

NO ◁─── MAXIMUM VALUE OF LIKELIHOOD <
THRESHOLD VALUE Th?

YES

TRANSMITTING SECTION 112
TRANSMITS VOICE AND ENVIRONMENTAL ⟩—ST705
NOISES TO SERVER 12

# FIG. 15

FROM SERVER

TO SERVER

PDA
81

RECEIVING SECTION — 113

TRANSMITTING SECTION — 112

CONTROL SIGNAL

USER'S VOICE, ENVIRONMENTAL NOISES

USER

115
SPEECH RECOGNITION SECTION

114
MEMORY

(GMM1, ACOUSTIC MODEL 1)
(GMM2, ACOUSTIC MODEL 2)
⋮
(GMMn, ACOUSTIC MODEL n)

DETERMINING SECTION
801

111
MICROPHONE

EP 1 293 964 A2

# FIG. 16

START

MICROPHONE 111 INPUTS USER'S
VOICE HAVING ENVIRONMENTAL NOISES ～ST901
ADDED THERETO

DETERMINING SECTION 801 TRANSFORMS
USER'S VOICE HAVING ENVIRONMENTAL NOISES
ADDED THERETO INTO FEATURE VECTOR,
AND APPLIES FEATURE VECTOR TO GMM1 TO ～ST902
GMMn STORED IN MEMORY 114 TO CALCULATE
LIKELIHOOD OF EACH GMM

ST903

NO ← MAXIMUM VALUE OF LIKELIHOOD <
THRESHOLD VALUE?

YES

ST904

NO ← ACOUSTIC MODEL TO BE
DOWNLOADED?

YES

TRANSMITTING SECTION 112 TRANSMITS
VOICE AND ENVIRONMENTAL NOISES TO ～ST905
SERVER 12

# FIG. 17

EP 1 293 964 A2

# FIG. 18

START

STORE USER'S VOICE IN MEMORY 1101 IN QUIET ENVIRONMENT —— ST1101

ACOUSTIC MODEL TO BE DOWNLOADED? ST1102

NO

YES

INPUT ENVIRONMENTAL NOISES AND STORE THEM IN MEMORY 1001 —— ST1103

TRANSMITTING SECTION 212 TRANSMITS VOICE AND ENVIRONMENTAL NOISES TO SERVER 22 —— ST1104